# EUROPEAN PATENT APPLICATION

(11) **EP 4 191 763 A1**
(43) Date of publication of application: **07.06.2023**
(21) Application number: 20947131.7
(22) Date of filing: 29.07.2020
(51) Int. Cl.: H01M 50/20, H01M 10/613, H01M 10/647, H01M 10/653, H01M 10/6555

(54) **BATTERY MODULE AND BATTERY SYSTEM**

(71) Applicant: KABUSHIKI KAISHA TOSHIBA, Minato-ku Tokyo 105-0023 (JP)
(72) Inventor: YAMAMOTO, Hirofumi, Tokyo 105-0023 (JP); MIYAMOTO, Hidenori, Tokyo 105-0023 (JP); FUKUDA, Shigeo, Tokyo 105-0023 (JP); KANO, Tadashi, Kawasaki-shi, Kanagawa 212-0013 (JP)
(74) Representative: AWA Sweden AB
(86) International application number: PCT/JP2020/029161
(87) International publication number: WO 2022/024284

(57) **Abstract**

A battery module of one embodiment includes a battery row, a frame, a sheet, a metal plate and an insulating film. The frame includes a frame side wall and a frame protruding portion protruding toward an inner side in an array direction of batteries from the frame side wall, and has an electrical insulating property. The frame protruding portion is adjacent to an outermost battery, which is on the outermost side among the batteries, on a lower side, and a through hole is adjacent to an inner side of the frame protruding portion. The sheet having an electrical insulating property is at least partially arranged in the through hole, and closely contacts the battery row from the lower side. The metal plate is arranged on the lower side of the sheet, and the insulating film extends to the outer side beyond a protruding end of the frame protruding portion between the metal plate and the sheet.

## Description

### FIELD

Embodiments of the present invention relate to a battery module and a battery system.

### BACKGROUND

In a battery module, a battery row (battery group) in which a plurality of batteries (unit cells) are arrayed is provided. In addition, some battery modules are configured to be mounted on a base such as a cooling plate from the viewpoint of improving dissipation of heat generated in the battery row and the like to the outside. Inside the cooling plate serving as the base, a flow path or the like through which a cooling fluid flows is formed.

As described above, in the battery module mounted on the base, it is required that dissipation of heat generated in the battery row to the base or the like is secured, and insulation of the battery row from a conductor other than the battery such as the base is appropriately secured.

### CITATION LIST

### PATENT LITERATURES

Patent Literature 1: International Publication No. 2013/084937
Patent Literature 2: Jpn. Pat. Appln. KOKAI Publication No. 2010-277863

### SUMMARY

### TECHNICAL PROBLEM

A problem to be solved by the present invention is to provide a battery module in which dissipation of heat generated in the battery row is secured and insulation of the battery row from a conductor other than the battery is appropriately secured. Another problem to be solved by the present invention is to provide a battery system including such a battery module.

### SOLUTION TO PROBLEM

A battery module according to one embodiment includes a battery row, a frame, a sheet, a metal plate and an insulating film. The battery row includes a plurality of batteries arrayed, and each of the plurality of batteries includes an electrode group and a metal exterior container in which the electrode group is housed. The frame includes a frame side wall facing an outermost battery, among the plurality of batteries, on the outermost side in an array direction of the battery row from an outer side in the array direction, and a frame protruding portion protruding toward an inner side in the array direction from the frame side wall, and the frame has an electrical insulating property. The frame protruding portion is adjacent to the outermost battery on a lower side in a height direction, and a through hole is formed adjacent to an inner side of the frame protruding portion in the array direction. The sheet has an electrical insulating property and is at least partially arranged in the through hole. The sheet closely contacts the plurality of batteries in the battery row from the lower side in the height direction. The metal plate is arranged on the lower side in the height direction with respect to the sheet. The insulating film has an electrical insulating property and is stacked on the metal plate between the metal plate and the sheet in the height direction. The insulating film extends to the outer side beyond a protruding end of the frame protruding portion in the array direction.

A battery system according to one embodiment includes the above-described battery module and a base. The battery module is installed on the base from an upper side in the height direction, and the metal plate is arranged between the base and the battery row in the height direction.

### BRIEF DESCRIPTION OF THE DRAWINGS

FIG. 1 is a perspective view schematically illustrating an example of a single battery according to an embodiment.
FIG. 2 is a perspective view showing a battery module according to a first embodiment.
FIG. 3 is a perspective view showing the battery module according to the first embodiment with a part of a case omitted.
FIG. 4 is a perspective view showing the battery module according to the first embodiment in a state of being disassembled into components.
FIG. 5 is a perspective view showing a part of the case of the battery module according to the first embodiment.
FIG. 6 is a plan view illustrating the part of the case of the battery module according to the first embodiment as viewed from the upper side in a height direction.
FIG. 7 is a perspective view showing another part of the case of the battery module according to the first embodiment different from the part shown in FIGS. 5 and 6.
FIG. 8 is a schematic view showing a plate connecting body provided in the battery module according to the first embodiment.
FIG. 9 is a cross-sectional view showing the battery module according to the first embodiment in a cross section perpendicular or substantially perpendicular to a lateral direction.
FIG. 10 is a cross-sectional view showing the battery module according to the first embodiment in a cross section perpendicular or substantially perpendicular to a depth direction.
FIG. 11 is a cross-sectional view showing the battery module according to the first embodiment in a cross section perpendicular or substantially perpendicular to the depth direction at a position shifting from the cross section of FIG. 10 in the depth direction.
FIG. 12 is a bottom view showing the battery module according to the first embodiment as viewed from the lower side in the height direction with a metal plate omitted.
FIG. 13 is a cross-sectional view showing one of the protruding portions protruding inward in the depth direction from the side wall of the case and the vicinity thereof in the battery module according to the first embodiment in a cross section perpendicular or substantially perpendicular to the lateral direction.
FIG. 14 is a cross-sectional view showing one of the protruding portions protruding inward in the lateral direction from the side wall of the case and the vicinity thereof in the battery module according to the first embodiment in a cross section perpendicular or substantially perpendicular to the depth direction.
FIG. 15 is a cross-sectional view schematically showing a configuration of one of four coupling screws coupling the metal plate to the case and the vicinity thereof in the battery module according to the first embodiment.
FIG. 16 is a plan view showing a part of a case of a battery module according to a first modification as viewed from the upper side in a height direction.
FIG. 17 is a plan view showing a part of a case of a battery module according to a second modification as viewed from the upper side in the height direction.
FIG. 18 is a schematic view showing a sheet provided in a battery module according to a third modification.
FIG. 19 is a schematic view showing a sheet provided in a battery module according to a fourth modification.
FIG. 20 is a perspective view showing a battery module according to a fifth modification.
FIG. 21 is a perspective view showing the battery module according to the fifth modification in a state of being disassembled into components.
FIG. 22 is a perspective view showing the battery module according to the fifth modification as viewed from a direction different from that in FIG. 20 with a metal plate omitted.
FIG. 23 is a cross-sectional view showing the battery module according to the fifth modification in a cross section perpendicular or substantially perpendicular to a lateral direction.
FIG. 24 is a cross-sectional view showing the battery module according to the fifth modification in a cross section perpendicular or substantially perpendicular to a depth direction.
FIG. 25 is a perspective view showing a battery module according to a sixth modification with a metal plate omitted.

### DETAILED DESCRIPTION

Hereinafter, embodiments will be described with reference to the drawings.

A battery system according to an embodiment includes a base and a battery module installed on the base. In the battery module, a battery group including a plurality of batteries (unit cells) is mounted. The battery constituting the battery group is, for example, a unit cell of a secondary battery such as a lithium ion secondary battery.

### [Battery]

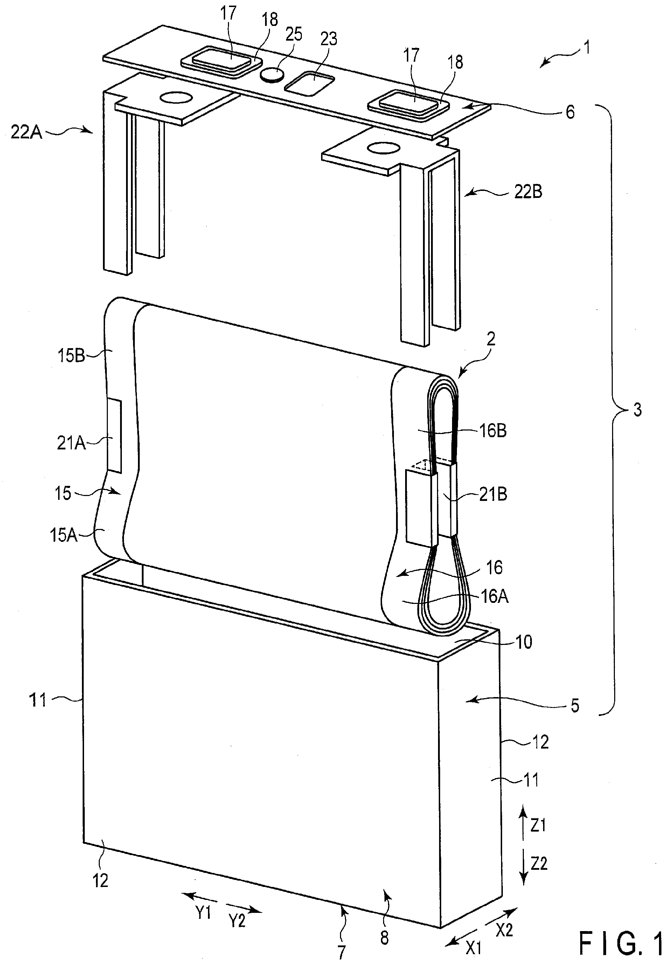

First, a battery (unit cell) will be described. FIG. 1 shows an example of a battery 1 as a single unit. The battery (unit cell) 1 includes an electrode group 2 and an exterior container 3 in which the electrode group 2 is housed. The exterior container 3 is formed of a metal such as aluminum, an aluminum alloy, iron, or stainless steel. The exterior container 3 includes a container body 5 and a lid 6. Here, in the battery 1 and the exterior container 3, a depth direction (a direction indicated by an arrow X1 and an arrow X2), a lateral direction (a direction indicated by an arrow Y1 and an arrow Y2) intersecting (perpendicular or substantially perpendicular to) the depth direction, and a height direction (a direction indicated by an arrow Z1 and an arrow Z2) intersecting (perpendicular or substantially perpendicular to) both the depth direction and the lateral direction are defined. In each of the battery 1 and the exterior container 3, the dimension in the depth direction is much smaller than each of the dimension in the lateral direction and the dimension in the height direction.

The container body 5 includes a bottom wall 7 and a peripheral wall 8. The inner cavity 10 in which the electrode group 2 is housed is defined by the bottom wall 7 and the peripheral wall 8. In the battery 1, the inner cavity 10 opens toward the side opposite to a side where the bottom wall 7 is located in the height direction. The peripheral wall 8 includes a pair of side walls 11 and a pair of side walls 12. The pair of side walls 11 face each other across the inner cavity 10 in the lateral direction. The pair of side walls 12 face each other across the inner cavity 10 in the depth direction. Each of the side walls 11 extends continuously along the depth direction between the side walls 12. Each of the side walls 12 extends continuously along the lateral direction between the side walls 11. The lid 6 is attached to the container body 5 at the opening of the inner cavity 10. Therefore, the lid 6 is attached to the peripheral wall 8 at the end opposite to the bottom wall 7. The lid 6 and the bottom wall 7 face each other across the inner cavity 10 in the height direction.

The electrode group 2 is formed in a flat shape, for example, and includes a positive electrode 15 and a negative electrode 16. In the electrode group 2, a separator (not shown) is interposed between the positive electrode 15 and the negative electrode 16. The separator is formed of a material having an electrical insulating property, and electrically insulates the positive electrode 15 from the negative electrode 16.

The positive electrode 15 includes a positive electrode current collector 15A such as a positive electrode current collecting foil and a positive electrode active material-containing layer (not shown) supported on a surface of the positive electrode current collector 15A. The positive electrode current collector 15A is, but is not limited to, for example, an aluminum foil or an aluminum alloy foil, and the like, and has a thickness of about 10 µm to 20 um. The positive electrode active material-containing layer includes a positive electrode active material, and may optionally contain a binder and an electro-conductive agent. Examples of the positive electrode active material include, but are not limited to, oxides, sulfides, polymers, and the like, which can occlude and release lithium ions. The positive electrode current collector 15A includes a positive electrode current collecting tab 15B as a portion not supporting the positive electrode active material-containing layer.

The negative electrode 16 includes a negative electrode current collector 16A such as a negative electrode current collecting foil and a negative electrode active material-containing layer (not shown) supported on a surface of the negative electrode current collector 16A. The negative electrode current collector 16A is, but is not limited to, for example, an aluminum foil, an aluminum alloy foil, a copper foil, and the like, and has a thickness of about 10 µm to 20 um. The negative electrode active material-containing layer includes a negative electrode active material, and may optionally contain a binder and an electro-conductive agent. Examples of the negative electrode active material include, but are not particularly limited to, metal oxides, metal sulfides, metal nitrides, carbon materials, which can occlude and release lithium ions. Examples of the negative electrode active material include a titanium-containing oxide and carbonaceous material. The negative electrode current collector 16A includes a negative electrode current collecting tab 16B as a portion not supporting the negative electrode active material-containing layer.

In the electrode group 2, the positive electrode current collecting tab 15B protrudes with respect to the negative electrode 16. The negative electrode current collecting tab 16B protrudes to the side opposite to the protruding direction of the positive electrode current collecting tab 15B with respect to the positive electrode 15. In the inner cavity 10 of the battery 1, the electrode group 2 is arranged in a state where the positive electrode current collecting tab 15B protrudes to one side in the lateral direction with respect to the negative electrode 16. In the electrode group 2, the negative electrode current collecting tab 16B protrudes with respect to the positive electrode 15 to the side opposite to a side where the positive electrode current collecting tab 15B protrudes in the lateral direction of the battery 1.

In the inner cavity 10, an electrolytic solution (not shown) is held (impregnated) in the electrode group 2. The electrolytic solution may be a nonaqueous electrolytic solution in which an electrolyte is dissolved in an organic solvent, or may be an aqueous electrolytic solution such as an aqueous solution. Instead of the electrolytic solution, a gel electrolyte may be used, or a solid electrolyte may be used. If the solid electrolyte is used as the electrolyte, the solid electrolyte is interposed between the positive electrode 15 and the negative electrode 16 instead of the separator in the electrode group. In this case, the positive electrode 15 is electrically insulated from the negative electrode 16 by the solid electrolyte.

In the battery 1, a pair of electrode terminals 17 are attached to an outer surface (upper surface) of the lid 6 of the exterior container 3. The electrode terminal 17 is formed of an electro-conductive material such as a metal. One of the electrode terminals 17 is a positive electrode terminal of the battery 1 while the other of the electrode terminals 17 is a negative electrode terminal of the battery 1. An insulating member 18 is provided between each of the electrode terminals 17 and the lid 6. Each of the electrode terminals 17 is electrically insulated from the exterior container 3 including the lid 6 by the insulating member 18.

The positive electrode current collecting tab 15B of the electrode group 2 is electrically connected to a positive electrode terminal, which is a corresponding one of the electrode terminals 17, via one or more positive electrode leads such as a backup lead 21A and a lead 22A. The negative electrode current collecting tab 16B of the electrode group 2 is electrically connected to a negative electrode terminal, which is a corresponding one of the electrode terminals 17, via one or more negative electrode leads such as a backup lead 21B and a lead 22B. Each of the positive electrode lead and the negative electrode lead is formed of an electro-conductive material such as a metal. In the inner cavity 10 of the exterior container 3, each of the positive electrode current collecting tab 15B and the positive electrode leads is electrically insulated from the exterior container 3 (the container body 5 and the lid 6) by one or more insulating members (not shown). In the inner cavity 10 of the exterior container 3, each of the negative electrode current collecting tab 16B and the negative electrode leads is electrically insulated from the exterior container 3 by one or more insulating members (not shown).

Further, in the example of FIG. 1, a gas release valve 23 and a liquid injection port are formed in the lid 6. A sealing plate 25 for closing the liquid injection port is welded to the outer surface of the lid 6. The gas release valve 23, the liquid injection port, etc. may not be provided in the battery. In addition, when the battery 1 is charged or discharged as described above, there is a possibility that the exterior container 3 may have an electric potential between an electric potential (positive electrode electric potential) of the positive electrode terminal (corresponding one of 17) and an electric potential (negative electrode electric potential) of the negative electrode terminal due to conduction through the electrolytic solution, etc.

### [Battery Module and Battery System]

Hereinafter, a battery module and a battery system including the battery module will be described. The battery system includes the battery module and a base on which the battery module is installed. The battery module includes a battery group, and the battery group includes one or more battery rows. Each of the one or more battery rows includes a plurality of batteries (unit cells), and the plurality of batteries are arrayed in each of the battery rows. The plurality of batteries constituting the battery row have, for example, the same configuration as that of the above-described battery 1.

### (First Embodiment)

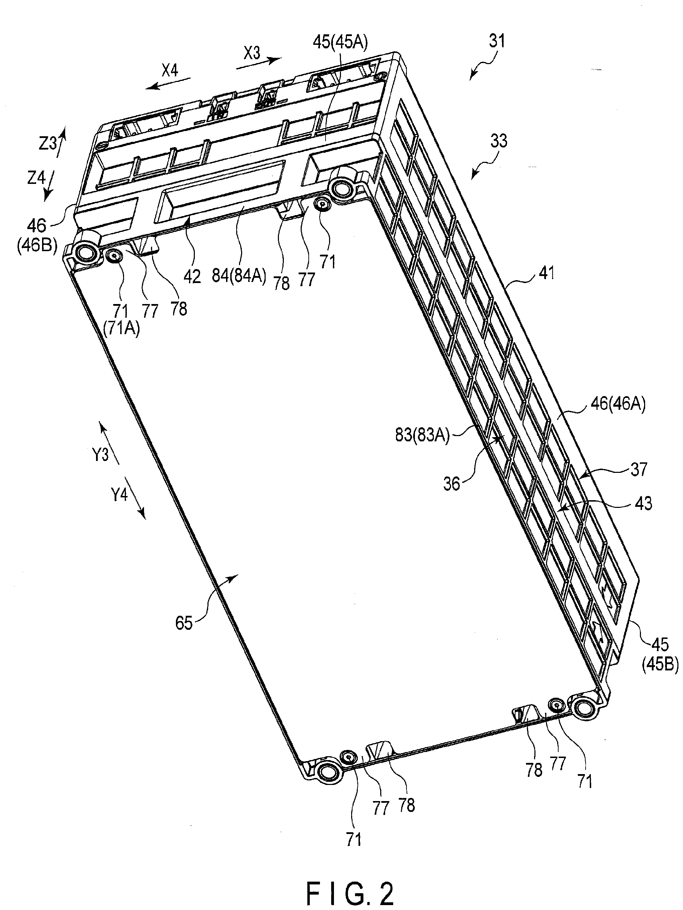

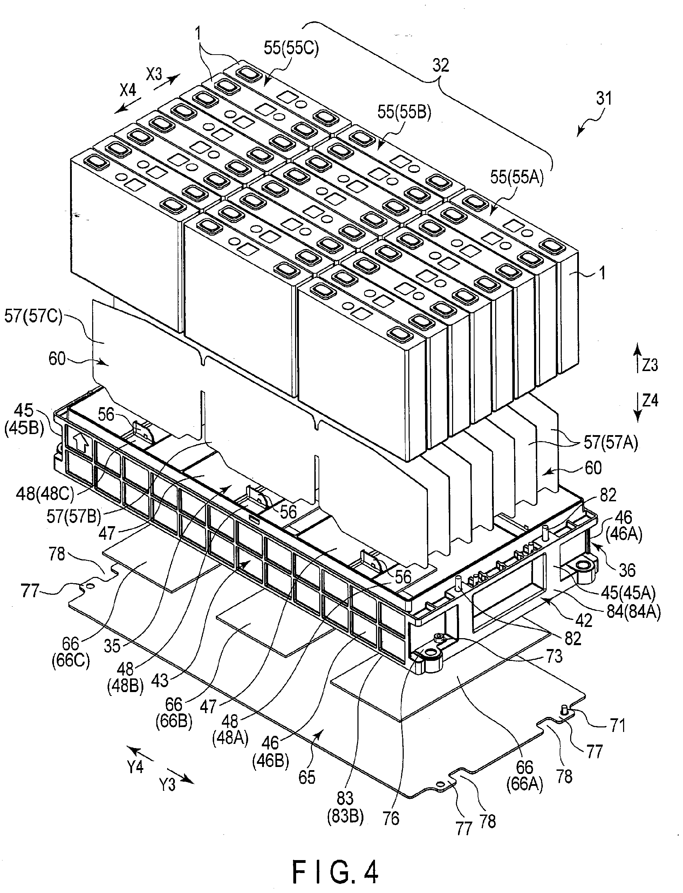

Hereinafter, a first embodiment of the battery system will be described. FIGS. 2 to 4 show a battery module 31 provided in the battery system of the present embodiment. As shown in FIGS. 2 and 4, etc., the battery module 31 includes a battery group 32 and a case 33 in which the battery group 32 is housed. A housing cavity 35 in which the battery group 32 is housed is defined by the case 33. The battery group 32 includes a plurality of batteries (unit cells) 1 described above, and in the battery group 32, the plurality of batteries 1 are electrically connected via a bus bar (not shown) or the like. In the battery group 32, at least one of an in-series connection structure in which the plurality of batteries 1 are electrically connected in series and an in-parallel connection structure in which the plurality of batteries 1 are electrically connected in parallel is formed.

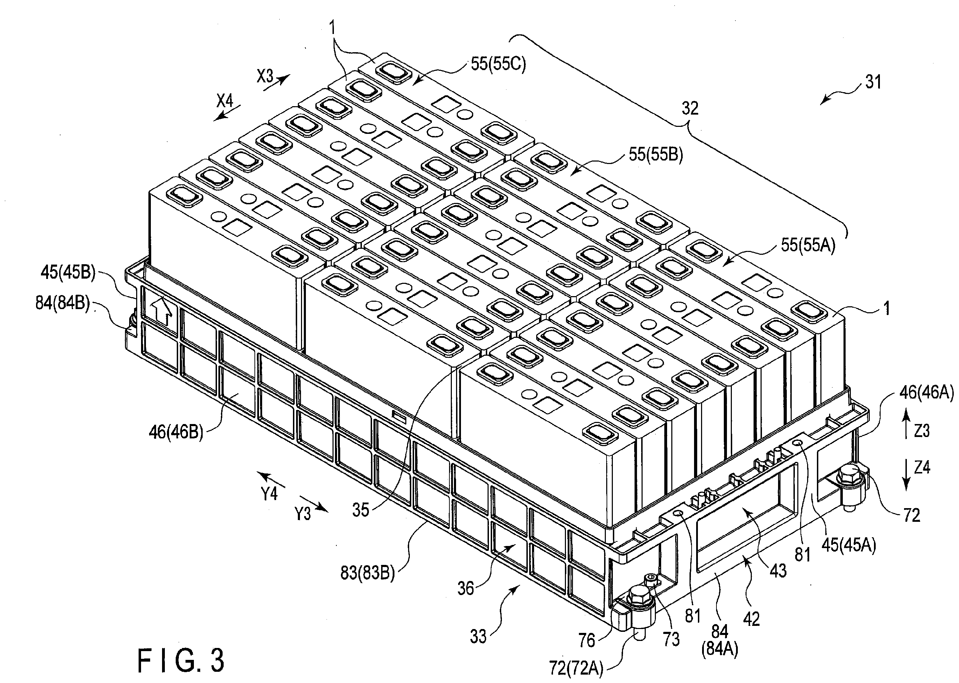

The case 33 is formed of a material having an electrical insulating property. Examples of the material forming the case 33 include resins such as polyphenylene ether (PPE), polycarbonate (PC), and polybutylene terephthalate (PBT). In the example of FIGS. 2 to 4, the case 33 is formed of a plurality of members including case members 36 and 37. In FIGS. 3 and 4, portions of the case 33 other than the case member 36 are omitted, and FIG. 4 shows a state of being disassembled into each component. Here, in the battery module 31 including the battery group 32 and the case 33, a depth direction (direction indicated by arrows X3 and X4), a lateral direction (direction indicated by arrows Y3 and Y4) intersecting (perpendicular or approximately perpendicular to) the depth direction, and a height direction (direction indicated by arrows Z3 and Z4) intersecting (perpendicular or approximately perpendicular to) both the depth direction and the lateral direction are defined. In the example of FIGS. 2 to 4, the case member (lower case member) 36 is attached to the case member (upper case member) 37 from the lower side in the height direction (arrow Z4 side).

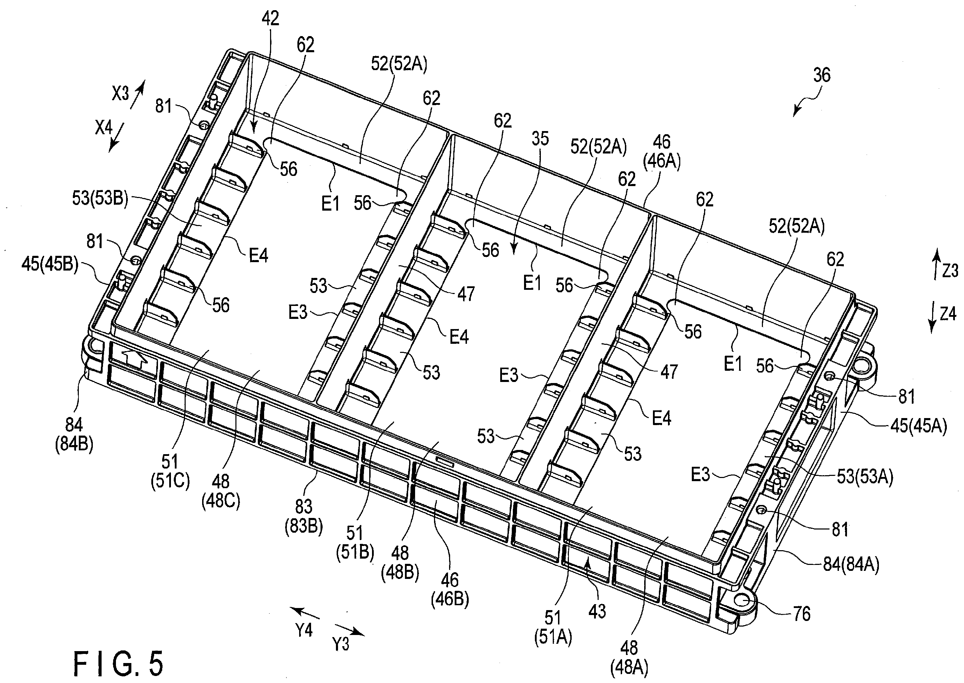

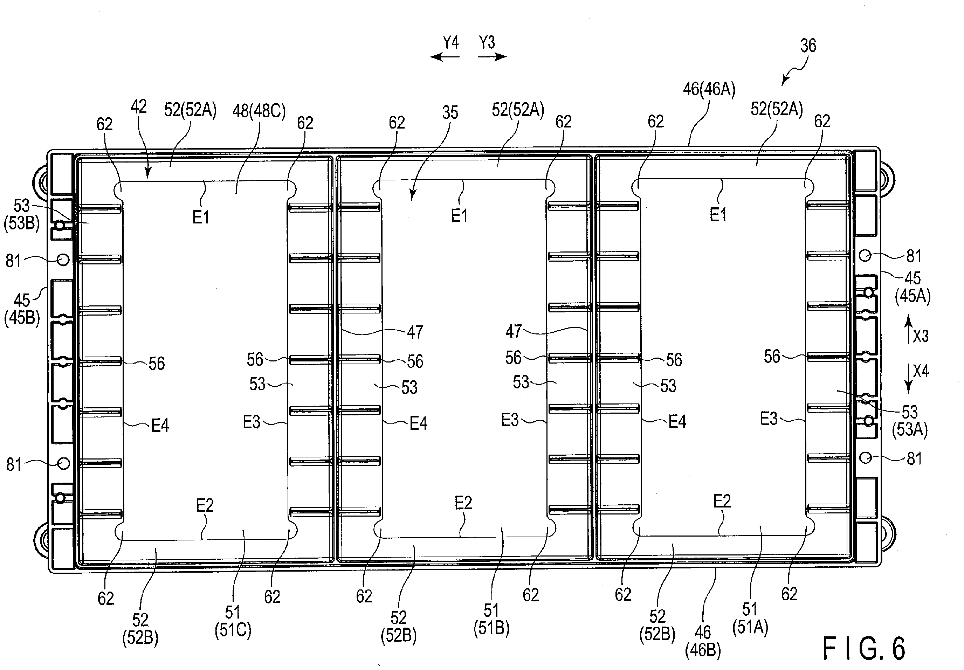

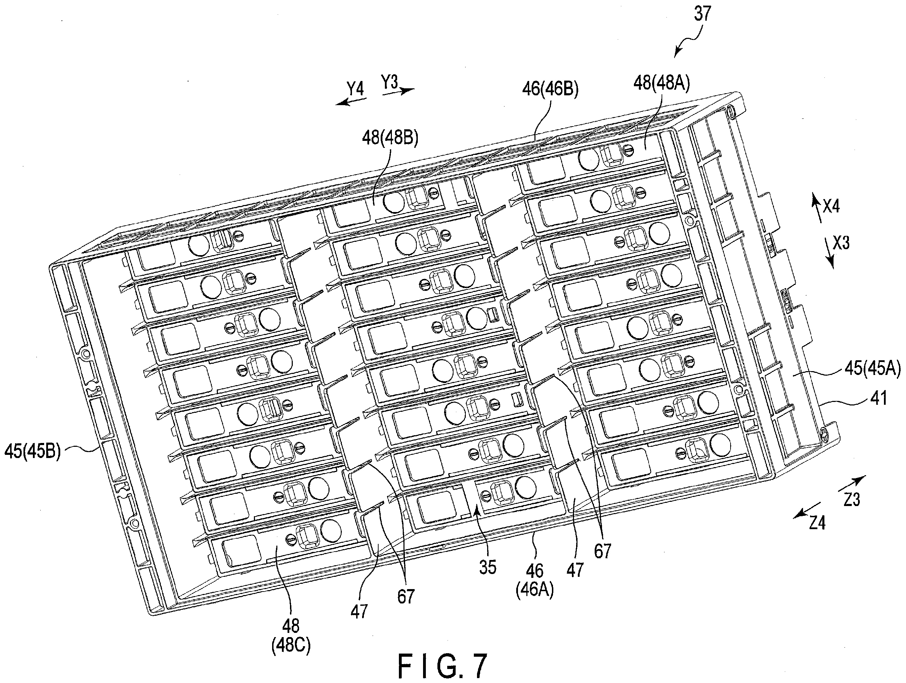

FIGS. 5 and 6 show a case member (lower case member) 36 forming a part of the case 33. FIG. 5 is a perspective view, and FIG. 6 shows a state viewed from the upper side (arrow Z3 side) in the height direction. FIG. 7 shows a case member (upper case member) 37 forming another part of the case 33 different from the case member 36. As shown in FIGS. 2 to 7, the case 33 includes a top wall (upper wall) 41, a bottom wall 42, and a peripheral wall 43. In the case 33, the top wall 41 and the bottom wall 42 face each other across the housing cavity 35 in the height direction. The peripheral wall 43 extends continuously along the height direction between the top wall 41 and the bottom wall 42. The peripheral wall 43 surrounds the housing cavity 35 over the entire periphery in the circumferential direction of the battery module 31. The peripheral wall 43 includes a pair of side walls 45 (45A, 45B) and a pair of side walls 46 (46A, 46B). The pair of side walls 45 face each other across the housing cavity 35 in the lateral direction. The pair of side walls 46 face each other across the housing cavity 35 in the depth direction. Each of the side walls 45 extends continuously along the depth direction between the side walls 46. Each of the side walls 46 extends continuously along the lateral direction between the side walls 45. In the example of FIGS. 2 to 7, the side wall 45A, which is one of the pair of side walls 45, is arranged away from the side wall 45B, which is the other of the pair of side walls 45, on the arrow Y3 side in the lateral direction. The side wall 46A, which is one of the pair of side walls 46, is arranged away from the side wall 46B, which is the other of the pair of side walls 46, on the arrow X3 side in the depth direction.

The case 33 includes two partition walls 47. The partition walls 47 are arranged between the pair of side walls 45 in the lateral direction, and are arranged away from each other in the lateral direction. Further, each of the partition walls 47 is arranged away from each of the side walls 45 in the lateral direction. Each of the partition walls 47 extends along the height direction between the top wall 41 and the bottom wall 42. Each of the partition walls 47 extends continuously along the depth direction between the side walls 46. Since the two partition walls 47 are formed as described above, in the example of FIGS. 2 to 4, the housing cavity 35 of the battery group 32 is partitioned into three regions 48 and is divided into three parts in the lateral direction by the partition walls 47. Here, the three regions 48 are referred to as regions 48A, 48B, and 48C in order from the arrow Y3 side in the lateral direction. The regions 48A and 48C are two formed at both ends in the region 48, and the region 48B is other than the two (48A, 48C) formed at both ends in the region 48.

Three through holes 51 are formed in the bottom wall 42. In the bottom wall 42, one through hole 51 is formed in each of the regions 48. Each of the regions 48 of the housing cavity 35 is open to the outside of the case 33 through a corresponding one of the through holes 51. Among the three through holes 51, one formed in the region 48A is referred to as a through hole 51A, one formed in the region 48B is a through hole 51B, and one formed in the region 48C is a through hole 51C.

The bottom wall 42 includes three pairs of protruding portions 52 and three pairs of relay portions 53. In the bottom wall 42, a pair of protruding portions 52 is provided in each of the regions 48, and a pair of relay portions 53 is provided in each of the regions 48. In each of the three regions 48, each of the pair of protruding portions 52 protrudes inward in the depth direction from a corresponding one of the side walls 46. Here, the protruding portion 52A, which is one of the pair of protruding portions 52, protrudes from the side wall 46A to a side where the side wall 46B is located, and the protruding portion 52B, which is the other of the pair of protruding portions 52, protrudes from the side wall 46B to a side where the side wall 46A is located.

In each of the regions 48, the through hole 51 is formed between the pair of protruding portions 52 in the depth direction. Further, in each of the regions 48, an edge E1 of the through hole 51 is formed by the protruding end of the protruding portion 52A, and an edge E2 of the through hole 51 is formed by the protruding end of the protruding portion 52B. Accordingly, each of the through holes 51 is formed adjacent to the inner sides of a corresponding pair of protruding portions 52 in the depth direction (an array direction of the batteries 1). In each of the through holes 51, the edge E1 is formed at an end on the side where the side wall 46A is located (arrow X3 side) in the depth direction. Further, in each of the through holes 51, the edge E2 is formed at an end on the side where the side wall 46B is located (arrow X4 side), that is, an end opposite to the edge E1 in the depth direction. Each of the edges E1 and E2 extends along the lateral direction. The protrusion length of each of the protruding portions 52 from the side wall 46 is preferably 5 mm to 20 mm.

In each of the regions 48, a portion between the protruding portions 52 is relayed by each of the pair of relay portions 53. Each of the relay portions 53 extends continuously along the depth direction between the protruding portions 52. In each of the regions 48, the through hole 51 is formed between the pair of relay portions 53 in the lateral direction. In each of two (48A, 48C) at both ends of the regions 48, one of the pair of relay portions 53 extends along the lateral direction from a corresponding one of the side walls 45 (45A, 45B) to the through hole 51, and the other of the pair of relay portions 53 extends along the lateral direction from a corresponding one of the partition walls 47 to the through hole 51. Accordingly, in each of the regions 48A and 48C, each of the relay portions 53 protrudes from the corresponding one of the side walls 45 and the partition walls 47 toward the through hole 51. Further, in the region 48B other than the two at both ends of the regions 48, each of the pair of relay portions 53 extends along the lateral direction from a corresponding one of the partition walls 47 to the through hole 51. Accordingly, in the region 48B, each of the relay portions 53 protrudes from the corresponding one of the partition walls 47 toward the through hole 51. Further, a relay portion 53A protruding from the side wall 45A in the region 48A and a relay portion 53B protruding from the side wall 45B in the region 48C are defined. The relay portion 53A protrudes inward in the lateral direction from the side wall 45A, and the relay portion 53B protrudes inward in the lateral direction from the side wall 45B.

In each of the regions 48, an edge E3 of the through hole 51 is formed by one protruding end of the relay portion 53, and an edge E4 of the through hole 51 is formed by the other protruding end of the relay portion 53. In each of the through holes 51, the edge E3 is formed at an end on one side (arrow Y3 side) in the lateral direction, and the edge E4 is formed at an end on the side opposite to the edge E3 in the lateral direction. In the through hole 51A, the edge E3 is formed at the end on the side where the side wall 45A is located in the lateral direction, and the edge E3 is formed by the protruding end of the relay portion 53A. In the through hole 51C, the edge E4 is formed at the end on the side where the side wall 45B is located in the lateral direction, and the edge E4 is formed by the protruding end of the relay portion 53B. In each of the through holes 51, each of the edges E3 and E4 extends continuously along the depth direction between the edges E1 and E2.

In each of the regions 48, since the pair of protruding portions 52 and the pair of relay portions 53 are formed as described above, a protrusion toward the through hole 51 is formed over the entire circumference of the through hole 51 by the protruding portions 52 and the relay portions 53. The protruding end of the protrusion formed by the protruding portions 52 and the relay portions 53 forms an edge of the through hole 51 over the entire circumference of the through hole 51.

In each of the through holes 51, two concave portions 62 are formed in each of the edges E3 and E4. Each of the concave portions 62 is concave toward the outer peripheral side of the through hole 51 and is concave toward one side of the case 33 in the lateral direction. The bottom of each concave portion 62 is formed in a curved surface shape (R surface shape), and the bottom of each concave portion 62 has an arc shape or a substantially arc shape as viewed from the height direction. In each of the edges E3 and E4, one of the two concave portions 62 is formed at the end on a side where the edge E1 (protruding portion 52A) is located, and the other of the two concave portions 62 is formed at the end on a side where the edge E2 (protruding portion 52B) is located. Accordingly, in each of the through holes 51, a pair of concave portions 62 is formed at an end on a side where the protruding portion 52A (side wall 46A) is located in the depth direction, and a pair of concave portions 62 is formed at an end on a side where the protruding portion 52B (side wall 46B) is located in the depth direction.

In each of the through holes 51, the dimension in the lateral direction (distance between the edges E3 and E4) is larger at two areas where the pair of concave portions 62 is provided than in other regions. The protrusion length of each of the relay portions 53 from the side wall 45 or the partition wall 47 is preferably 5 mm to 20 mm in the region where the concave portion 62 is formed.

The battery group 32 includes one or more battery rows 55, and in the example of FIGS. 3 and 4, etc., the battery group 32 includes three battery rows 55. Each of the battery rows 55 is arranged in a corresponding one of the regions 48 in the housing cavity 35. The battery rows 55 adjacent to each other in the lateral direction of the battery module 31 are partitioned by the partition wall 47. In the battery row 55, a plurality of batteries 1 are arrayed, and in the example of FIGS. 3 and 4, etc., eight batteries 1 are arrayed in each of the battery rows 55. In each of the battery rows 55, the batteries 1 are arrayed such that an array direction of the batteries 1 coincides or approximately coincides with the depth direction of the battery module 31 (case 33). In each of the three regions 48, the battery row 55 is adjacent to the pair of protruding portions 52 and the pair of relay portions 53 on the bottom wall 42 on the upper side in the height direction. Among the three battery rows 55, one arranged in the region 48A is referred to as a battery row 55A, one arranged in the region 48B is a battery row 55B, and one arranged in the region 48C is a battery row 55C.

In the battery group 32 (each of the battery rows 55), the depth direction of each of the batteries 1 coincides or approximately coincides with the depth direction of the battery module 31 (case 33), and the lateral direction of each of the batteries 1 coincides or approximately coincides with the lateral direction of the battery module 31. In the battery group 32, the height direction of each of the batteries 1 coincides or substantially coincides with the height direction of the battery module 31. Each of the batteries 1 is arranged in the housing cavity 35 in a state where the outer surface of the bottom wall 7 faces a side where the bottom wall 42 of the case 33 is located and the outer surface of the lid 6 faces a side where the top wall 41 of the case 33 is located. Further, in each of the battery rows 55, the plurality of batteries 1 are arrayed without shifting or almost without shifting with respect to one another in the lateral direction and the height direction of the battery module 31. In addition, the three battery rows 55 are arranged without shifting or almost without shifting with respect to one another in the depth direction and the height direction of the battery module 31.

In each of the regions 48, a plurality of segmentation plates 56 is formed by the case 33. In the example of FIGS. 5 and 6, etc., seven segmentation plates 56 are formed in each of the relay portions 53, and in each of the relay portions 53, the segmentation plate 56 protrudes upward in the height direction. In each of the regions 48, the segmentation plates 56 are arranged at both ends in the lateral direction. Further, each of the segmentation plates 56 formed in one of the pair of relay portions 53 does not shift or does not almost shift in the depth direction with respect to a corresponding one of the segmentation plates 56 formed in the other of the pair of relay portions 53. Accordingly, each of the regions 48 is partitioned by the segmentation plates 56 into the same number of segmentation ranges as the number of batteries 1 forming a corresponding one of the battery rows 55. In the example of FIGS. 5 and 6, etc., each of the regions 48 is partitioned into eight segmentation ranges. In each of the battery rows 55, each of the batteries 1 is arranged in a corresponding one of the above-described segmentation ranges. Since the segmentation plates 56 are provided as described above, in each of the battery rows 55 of the battery group 32, a pair of segmentation plates 56 is provided between the batteries 1 adjacent to each other in the array direction (depth direction of the battery module 31) .

In each battery row 55, a partition plate (separator) 57 is provided between the batteries 1 adjacent to each other in the array direction (depth direction of the battery module 31). One or more partition plates 57 are provided in each of the battery rows 55, and in the example of FIG. 4, etc., seven partition plates 57 are provided in each of the battery rows 55. At least an outer surface of each of the partition plates 57 is formed of a material having an electrical insulating property. Examples of the material forming at least the outer surface of the partition plate 57 include resins having an electrical insulating property such as polypropylene (PP), polyphenylene ether (PPE), polycarbonate (PC), and polybutylene terephthalate (PBT). In each of the regions 48, each of the partition plates 57 does not shift or does not almost shift in the depth direction with respect to a corresponding pair of segmentation plates 56.

Among the partition plates 57, one arranged in the region 48A is referred to as a partition plate 57A, one arranged in the region 48B is a partition plate 57B, and one arranged in the region 48C is a partition plate 57C. Therefore, in the example of FIG. 4, etc., seven partition plates 57A, seven partition plates 57B, and seven partition plates 57C are provided. Each of the partition plates 57A does not shift or does not almost shift in the depth direction (array direction) with respect to a corresponding one of the partition plates 57B and a corresponding one of the partition plates 57C. Therefore, each of the partition plates 57A is arranged side by side in the lateral direction with respect to the corresponding one of the partition plates 57B and the corresponding one of the partition plates 57C. In the example of FIG. 4, etc., three partition plates 57A to 57C arranged in the lateral direction are connected to each other, and a plate connecting body 60 is formed from the three partition plates 57A to 57C. In the example of FIG. 4, etc., each of the partition plates 57 is separated from the case 33; however, in another example, each of the partition plate 57 may be formed integrally with the case 33.

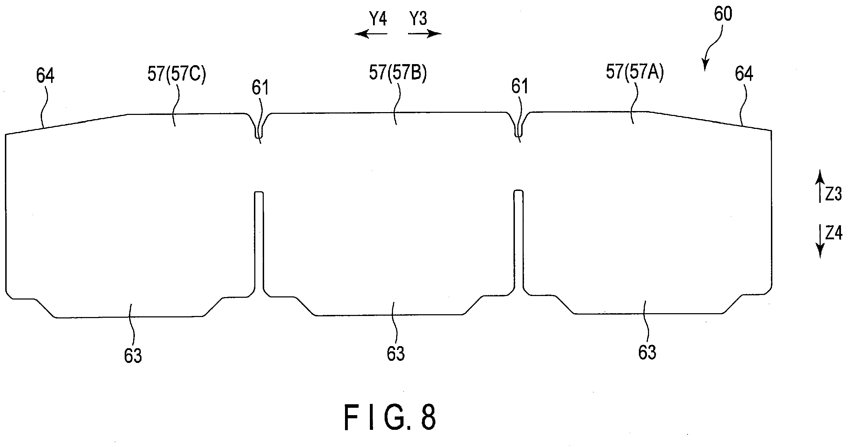

FIG. 8 shows the plate connecting body 60. In the example of FIG. 4, etc., seven plate connecting body 60 are provided. As shown in FIGS. 4 and 8, in the plate connecting body 60, the three partition plates 57A to 57C are connected integrally via a connecting portion 61. The connecting portion 61 connects two partition plates 57 adjacent to each other in the lateral direction. Accordingly, in the plate connecting body 60, a connecting portion 61 that connects the partition plates 57A and 57B and a connecting portion 61 that connects the partition plates 57B and 57C are formed.

In each of the partition plates 57, a plate protrusion 63 is formed at a lower edge in the height direction. In each of the partition plates 57, the plate protrusion 63 protrudes downward in the height direction of the battery module 31. In each of the partition plates 57, the plate protrusion 63 is formed at the center in the lateral direction of the battery module 31 (the width direction of the partition plate 57). An inclined edge 64 is formed in each of the two partition plates 57A and 57C at both ends of the plate connecting body 60. The inclined edge 64 is not formed in the partition plate 57B other than the partition plates 57A and 57C. In each of the partition plates 57A and 57C, the inclined edge 64 is formed at an upper edge in the height direction. In each of the partition plates 57A and 57C, the inclined edge 64 extends to the outer edge in the lateral direction. In each of the partition plates 57A and 57C, the inclined edge 64 extends in a state of being inclined with respect to both the height direction and the lateral direction. In the inclined edge 64, a portion on the outer side of the battery module 31 in the lateral direction, that is, a portion closer to the outer edge is located on a lower side in the height direction.

As shown in FIG. 7, in the case member (upper case member) 37, a groove 67 is formed in a portion forming each partition wall 47. In each of the partition walls 47, the same number of grooves 67 as the plate connecting bodies 60 are formed, and in the example of FIG. 7, etc., seven grooves 67 are formed in each of the partition walls 47. In each of the partition walls 47, each of the grooves 67 does not shift or does not almost shift in the depth direction with respect to a corresponding one of plate connecting bodies 60. In each of the plate connecting bodies 60, the connecting portion 61 between the partition plates 57A and 57B is inserted into a corresponding one of the grooves 67 formed in the partition wall 47 between the regions 48A and 48B. Further, in each of the plate connecting bodies 60, the connecting portion 61 between the partition plates 57B and 57C is inserted into a corresponding one of the grooves 67 formed in the partition wall 47 between the regions 48B and 48C.

As shown in FIGS. 2 and 4, etc., the battery module 31 includes a metal plate (bottom plate) 65 on which the battery group 32 and the case 33 are installed. The metal plate (heat dissipation plate) 65 has a higher thermal conductivity than the case 33. Examples of the material forming the metal plate 65 include aluminum and an aluminum alloy. The metal plate 65 is attached to the case 33 from the side where the bottom wall 42 is located (lower side) in the height direction of the battery module 31. The metal plate 65 is formed in an appropriate dimension, shape, etc., as necessary, and in one example, is formed in a flat plate shape or a substantially flat plate shape having a thickness of about 0.5 mm to 5 mm.

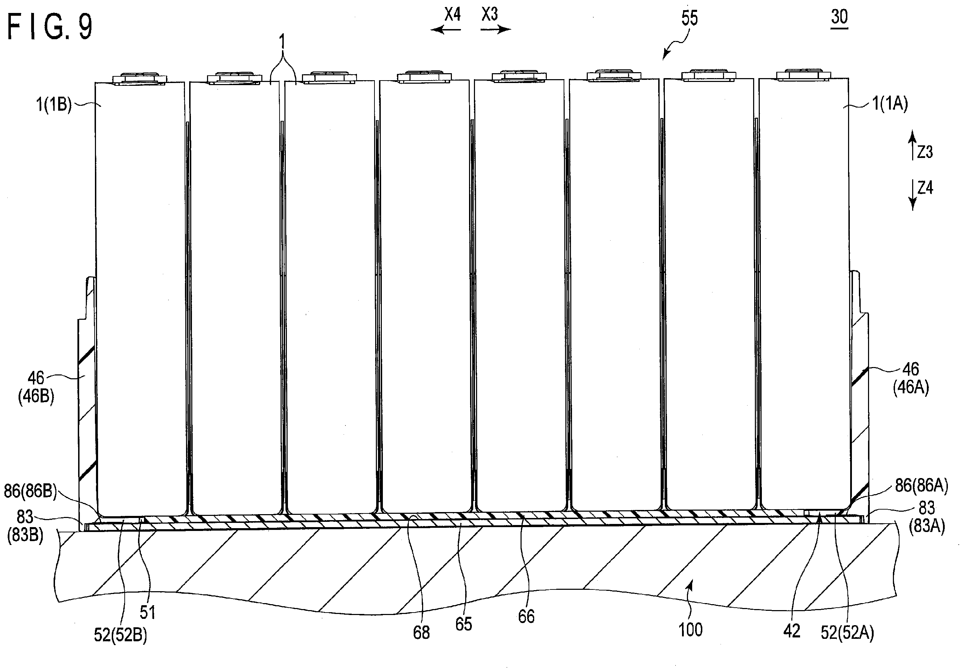

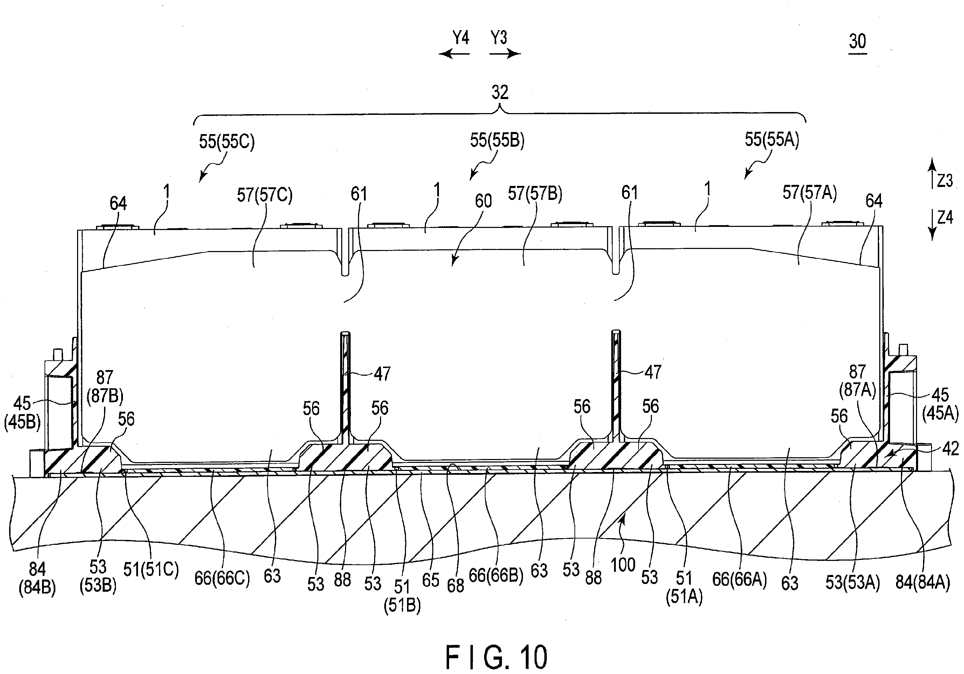

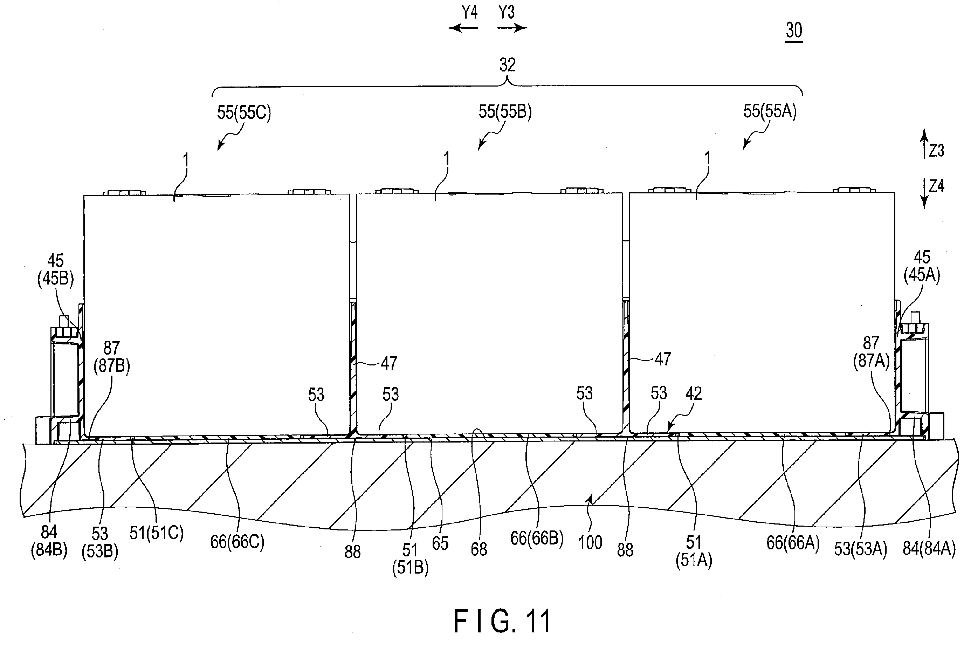

FIGS. 9 to 11 show a battery system 30 including the above-described battery module 31. FIG. 9 shows a cross section perpendicular or substantially perpendicular to the lateral direction of the battery module 31, and FIGS. 10 and 11 show a cross section perpendicular or substantially perpendicular to the depth direction of the battery module 31. Further, FIG. 11 shows a cross section at a position shifting in the depth direction with respect to the cross section of FIG. 10. As shown in FIG. 10, in each of the regions 48, the plate protrusion 63 of each of the partition plates 57 is arranged between a corresponding pair of the segmentation plates 56 in the lateral direction. That is, the plate protrusion 63 of each of the partition plates 57 is inserted into the gap between the corresponding pair of segmentation plates 56.

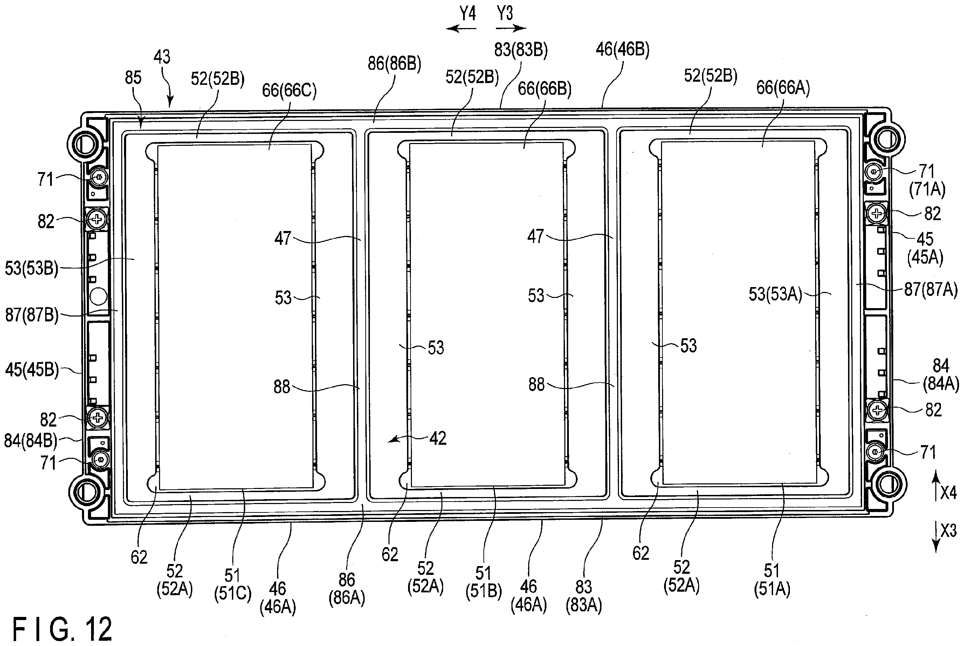

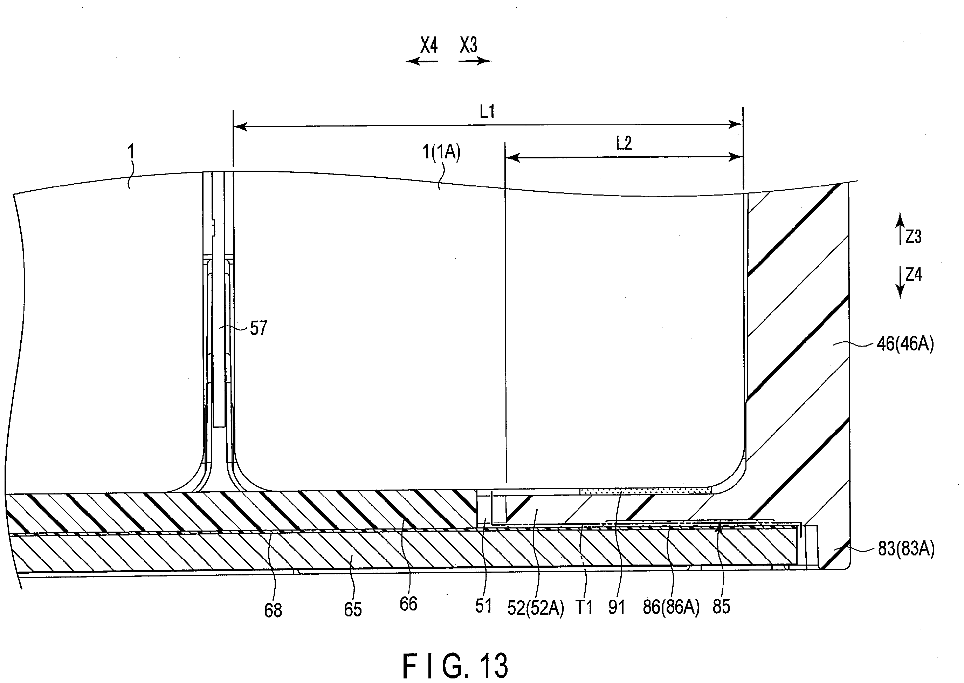

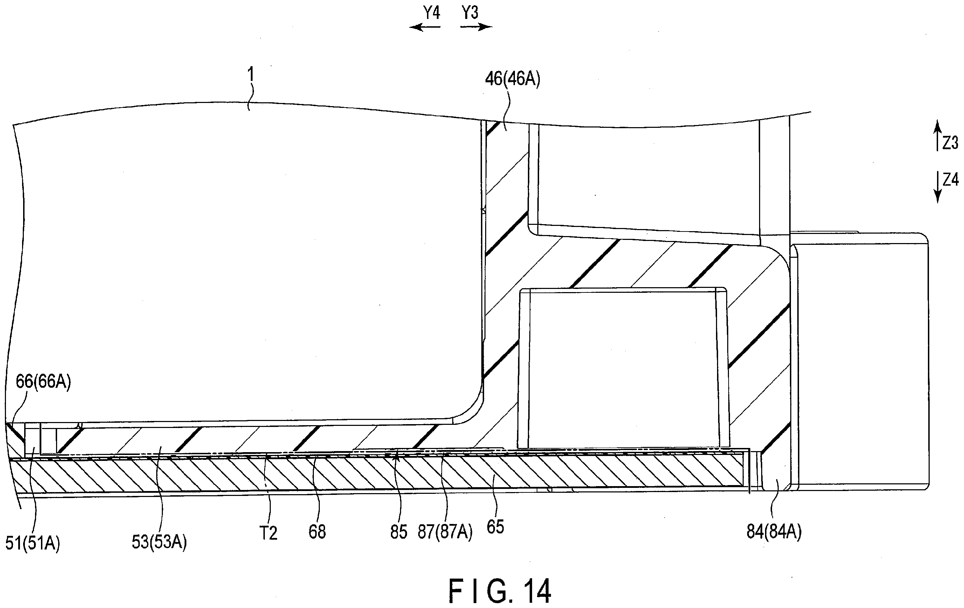

FIG. 12 shows the battery module 31 as viewed from the lower side in the height direction with the metal plate 65 omitted. FIG. 13 shows one of the protruding portions 52 protruding inward in the depth direction from the side wall 46 and the vicinity thereof, and FIG. 14 shows one of the relay portions 53A and 53B protruding inward in the lateral direction from the side wall 45 and the vicinity thereof. FIG. 13 shows a cross section perpendicular or substantially perpendicular to the lateral direction of the battery module 31, and FIG. 14 shows a cross section perpendicular or substantially perpendicular to the depth direction of the battery module 31.

As shown in FIGS. 4 and 9 to 14, the battery module 31 includes three sheets 66. Each of the sheets 66 has plasticity and an electrical insulating property, and has a higher thermal conductivity than the case 33 and the air. Examples of the material forming each of the sheets 66 include a resin having plasticity and an electrical insulating property such as silicone, and a mixed material of the resin and alumina particles. Each of the sheets 66 is sandwiched between the battery group 32 and the metal plate 65 in the height direction of the battery module 31, and the metal plate 65 is arranged on the lower side of the sheet 66 in the height direction (the side opposite to the battery group 32).

Each of the sheets 66 is arranged in a corresponding one of the through holes 51 in the housing cavity 35. Each of the sheets 66 closely contacts a corresponding one of the battery rows 55. In each of the battery rows 55, a corresponding one of the sheets 66 closely contacts the exterior container 3 (bottom wall 7) of each of the batteries 1 from a side where the metal plate 65 is located (lower side) in the height direction of the battery module 31. Among the three sheets 66, one arranged in the through hole 51A is referred to as a sheet 66A, one arranged in the through hole 51B is a sheet 66B, and one arranged in the through hole 51C is a sheet 66C. Accordingly, the sheet 66A closely contacts the battery row 55A from the lower side in the height direction, the sheet 66B closely contacts the battery row 55B from the lower side in the height direction, and the sheet 66C closely contacts the battery row 55C from the lower side in the height direction.

In each of the regions 48, a protrusion toward the through hole 51 is formed by the pair of protruding portions 52 and the pair of relay portions 53 as described above. Therefore, in each of the regions 48, the relay portion 53 of the bottom wall 42 is adjacent to both sides of the sheet 66 in the lateral direction of the battery module 31. Further, in each of the regions 48, the protruding portion 52 (52A, 52B) of the bottom wall 42 is adjacent to both sides (outer sides) of the sheet 66 in the depth direction of the battery module 31 (array direction of the battery row 55).

In each of the battery rows 55, a portion where the sheet 66 is in close contact from the lower side in the height direction is formed. Further, in each of the battery rows 55, a portion where the relay portion 53 is adjacent to the lower side in the height direction and a portion where the protruding portion 52 is adjacent to the lower side in the height direction are formed. In each of the battery rows 55, the portion where the relay portion 53 is adjacent is adjacent to both sides of the portion where the sheet 66 is in close contact in the lateral direction. Further, in each of the battery rows 55, the portion where the protruding portion 52 is adjacent is adjacent to both sides of the portion where the sheet 66 is in close contact in the depth direction (array direction).

Here, in each of the battery rows 55, outermost batteries 1A and 1B among the plurality of batteries 1 on the outermost sides in the array direction are defined. In each of the battery rows 55, the outermost batteries 1A and 1B are arranged at both ends in the array direction. In the example of FIG. 9, etc., in each of the battery rows, the outermost battery 1A is arranged at an end on the side where the side wall 46A is located in the depth direction, and the outermost battery 1B is arranged at an end on the side where the side wall 46B is located in the depth direction, that is, an end opposite to the outermost battery 1A.

In each of the battery rows 55, merely a portion where the sheet 66 is in close contact and a portion where the relay portion 53 is adjacent are formed, and a portion where the protruding portion 52 is adjacent is not formed in each of the batteries 1 other than the outermost batteries 1A and 1B. On the other hand, in the outermost battery 1A, a portion where the protruding portion 52A is adjacent is formed in addition to a portion where the sheet 66 is in close contact and a portion where the relay portion 53 is adjacent. In the outermost battery 1B, a portion where the protruding portion 52B is adjacent is formed in addition to a portion where the sheet 66 is in close contact and a portion where the relay portion 53 is adjacent. Accordingly, in each of the battery rows 55, the contact area of the sheet 66 with each of the outermost batteries 1A and 1B is smaller than the contact area of the sheet 66 with each of the batteries 1 other than the outermost batteries 1A and 1B.

In each of the outermost batteries 1A and 1B, a portion where the protruding portion 52 is adjacent is formed at an outer portion in the depth direction of the battery module 31. Accordingly, in the outermost battery 1A, the protruding portion 52A is adjacent to the lower side in the height direction at a portion on the side close to the side wall 46A, and in the outermost battery 1B, the protruding portion 52B is adjacent to the lower side in the height direction at a portion on the side close to the side wall 46B. Here, a total dimension L1 of each of the outermost batteries 1A and 1B in the depth direction and a dimension L2 of the portion where the protruding portion 52 is adjacent in the depth direction in each of the outermost batteries 1A and 1B are defined (see FIG. 13). The dimension L2 corresponds to a dimension from an outer end in the depth direction to the protruding end of the protruding portion 52 in each of the outermost batteries 1A and 1B. In the present embodiment, the ratio of the dimension L2 to the dimension L1 is preferably 20% to 70%.

In the present embodiment, as shown in FIG. 13, etc., the outermost battery 1A is bonded to the protruding portion 52 A via an adhesive 91. Then, the outermost battery 1B is bonded to the relay portion 53 via an adhesive. The bottom wall 7 of the exterior container 3 is bonded to the protruding portion 52 at a portion where the protruding portion 52 is adjacent in each of the outermost batteries 1A and 1B. The outermost battery 1A may be bonded to the side wall 46A instead of the protruding portion 52A or in addition to the protruding portion 52A. Further, the outermost battery 1B may be bonded to the side wall 46B instead of the protruding portion 52B or in addition to the protruding portion 52B. In the battery module 31, an adhesive is preferably provided in at least one of a portion between the outermost battery 1A and the protruding portion (frame protruding portion) 52A and a portion between the outermost battery 1A and the side wall (frame side wall) 46A. Further, in the battery module 31, an adhesive is preferably provided in at least one of a portion between the outermost battery 1B and the protruding portion (frame protruding portion) 52B and a portion between the outermost battery 1B and the side wall (frame side wall) 46B. In one example, each of the outermost batteries 1A and 1B may be bonded to the relay portion 53 via an adhesive or the like. In addition, each of the outermost batteries 1A and 1B may be bonded to any corresponding one of the side walls 45 and the partition walls 47 via an adhesive or the like.

In the present embodiment, each of the batteries 1 other than the outermost batteries 1A and 1B is bonded to the relay portion 53 via an adhesive or the like. In a portion where the relay portion 53 is adjacent in each of the batteries 1 other than the outermost batteries 1A and 1B, the bottom wall 7 of the exterior container 3 is bonded to the relay portion 53. Each of the batteries 1 other than the outermost batteries 1A and 1B may be bonded to any corresponding one of the side walls 45 and the partition walls 47 instead of the relay portion 53 or in addition to the relay portion 53. Further, each of the batteries 1 may be bonded to a corresponding segmentation plate 56 via an adhesive or the like. In one example, an adhesive such as the adhesive 91 may not be provided, and each of the batteries 1 may not be bonded to the case 33.

As an adhesive such as the adhesive 91, a silicone-based or epoxy-based adhesive is preferably used. In addition, the adhesive to be used preferably has a comparative tracking index (CTI) of 175 or more. The comparative tracking index can be measured based on a method of measuring the comparative tracking index in IEC 60112, IEC 60587, etc. Since the comparative tracking index of the adhesive 91 is 175 or more, a short circuit or the like between each of the batteries 1 (battery row 55) and a conductor other than the battery via the adhesive is effectively prevented. In addition, each of the above-described sheets 66 also preferably has a comparative tracking index of 175 or more. This effectively prevents a short circuit between each of the batteries 1 (battery row 55) and a conductor other than the battery via the sheet 66, a short circuit between the plurality of batteries 1 via the sheet 66, and the like.

As shown in FIGS. 9 to 14, etc., each of the through holes 51 is almost filled with a corresponding one of the sheets 66. However, the four concave portions 62 are not filled with the corresponding one of the sheets 66 in each of the through holes 51. Further, in each of the through holes 51, a gap may be formed between the sheet 66 to be arranged and the protruding end of each of the protruding portions 52 for convenience of design and manufacturing. Similarly, in each of the through holes 51, a gap may be formed between the sheet 66 to be arranged and the protruding end of each of the relay portions 53 for convenience of design and manufacturing.

In the battery module 31, an insulating film 68 is formed on a surface of the metal plate 65 facing a side where the battery group 32 is located (surface facing upward). The insulating film 68 is formed between the sheet 66 and the metal plate 65 in the height direction of the battery module 31, and is adjacent to the lower side of the sheet 66 in the height direction. The insulating film 68 has an electrical insulating property. The insulating film 68 is, for example, a film and the like, and is formed of a resin having an electrical insulating property. Examples of the resin forming the insulating film 68 include epoxy resin, polyimide (PI), and polyethylene terephthalate (PET), for example. Further, the insulating film 68 may be formed of a mixed material obtained by mixing an inorganic filler such as a ceramic filler with the above-described resin. The insulating film 68 is stacked on the side where the battery group 32 is located (upper side in the height direction) with respect to the metal plate 65. The insulating film 68 is stacked on the metal plate 65 through adhesion of thermocompression bonding, adhesion of a double-sided tape, or the like. Therefore, the insulating film 68 closely contacts the metal plate 65 from the side where the battery group 32 is located (upper side) in the height direction. Further, each of the sheets 66 closely contacts the insulating film 68 from the upper side in the height direction. In one example, the metal plate 65 may be formed of an aluminum alloy or a copper alloy, and the surface of the metal plate 65 on which the insulating film 68 is stacked may be subjected to a chemical conversion treatment or the like to enhance the adhesion of the insulating film 68 to the metal plate 65. In addition, the insulating film 68 preferably has a comparative tracking index of 175 or more. Since the comparative tracking index of the insulating film 68 is 175 or more, a short circuit or the like between each of the batteries 1 (battery row 55) and a conductor other than the battery via the insulating film 68 is effectively prevented.

In the example of FIGS. 9 to 11, etc., the insulating film 68 is formed over the entire surface of the metal plate 65 facing the upper side. In this case, the dimension of the insulating film 68 in the depth direction (the array direction of the battery row 55) is the same as or substantially the same as the dimension of the metal plate 65 in the depth direction (the array direction of the battery row 55). Additionally, the dimension of the insulating film 68 in the lateral direction is the same as or substantially the same as the dimension of the metal plate 65 in the lateral direction. In another example, the insulating film 68 may not be formed over the entire surface of the metal plate 65 facing the upper side. Even in this case, the insulating film 68 is formed over most of the surface of the metal plate 65 facing the upper side. That is, even when the outer edge of the insulating film 68 is located at an inner side of the outer edge of the metal plate 65 in the depth direction (array direction of the battery row 55), the distance from the outer edge of the metal plate 65 to the outer edge of the insulating film 68 inward in the depth direction is preferably 3 mm or less. Additionally, even when the outer edge of the insulating film 68 is located at an inner side of the outer edge of the metal plate 65 in the lateral direction, the distance from the outer edge of the metal plate 65 to the outer edge of the insulating film 68 inward in the lateral direction is preferably 3 mm or less. Further, the protrusion length of each of the protruding portions 52 from the side wall 46 coincides or substantially coincides with the dimension of the portion where each of the protruding portions (frame protruding portions) 52 and the insulating film 68 overlap in the depth direction as viewed from the height direction. Therefore, the dimension of the portion where each of the protruding portions 52 and the insulating film 68 overlap in the depth direction (array direction of the batteries 1) is preferably 5 mm to 20 mm.

The metal plate 65 and the insulating film 68 extend continuously in the depth direction (array direction) from the protruding end of the protruding portion 52A (the edge E1 of the through hole 51) to the protruding end of the protruding portion 52B (the edge E2 of the through hole 51). Further, the metal plate 65 and the insulating film 68 extend to a position on an outer side of the protruding end of the protruding portion 52A in the depth direction. Additionally, the metal plate 65 and the insulating film 68 extend to a position on an outer side of the protruding end of the protruding portion 52B in the depth direction. That is, the metal plate 65 and the insulating film 68 extend outward beyond the protruding end of the protruding portion 52A and extend outward beyond the protruding end of the protruding portion 52B in the depth direction (array direction of the batteries 1). Accordingly, the metal plate 65 and the insulating film 68 extend outward beyond the gap between each of the sheets 66A to 66C and the protruding portion 52A, and extend outward beyond the gap between each of the sheets 66A to 66C and the protruding portion 52B in the array direction of the batteries 1.

The metal plate 65 and the insulating film 68 extend continuously in the lateral direction from the protruding end of the relay portion 53A (the edge E3 of the through hole 51A) to the protruding end of the relay portion 53B (the edge E4 of the through hole 51C). Further, the metal plate 65 and the insulating film 68 extend to a position on an outer side of the protruding end of the relay portion 53A in the lateral direction. Additionally, the metal plate 65 and the insulating film 68 extend to a position on an outer side of the protruding end of the relay portion 53B in the lateral direction. That is, the metal plate 65 and the insulating film 68 extend outward beyond the protruding end of the relay portion 53A and extend outward beyond the protruding end of the relay portion 53B in the lateral direction. Accordingly, the metal plate 65 and the insulating film 68 extend outward beyond the gap between the sheet 66A and the relay portion 53A, and extend outward beyond the gap between the sheet 66C and the relay portion 53B in the lateral direction of the battery module 31.

Since the metal plate 65 and the insulating film 68 are formed as described above, in each of the regions 48, the metal plate 65 and the insulating film 68 extend to the outer peripheral side beyond the edges E1 to E4 of the through holes 51. The insulating film 68 is adjacent to each of the protruding portion 52, the relay portion 53, and the partition wall 47 of the case 33 on the lower side in the height direction. The insulating film 68 is formed between each of the protruding portions 52 and the metal plate 65 in the height direction, between each of the relay portions 53 and the metal plate 65 in the height direction, and between the partition wall 47 and the metal plate 65 in the height direction.

Since the battery module 31 is formed as described above, each of the sheet 66, and the protruding portion 52 and the relay portion 53 of the case 33 is located between the battery group 32 and the metal plate 65 in the height direction of the battery module 31. In the battery module 31, heat generated in each of the battery rows 55 is transferred to the metal plate 65 through a corresponding one of the sheets 66 and the insulating film 68. Therefore, a heat transfer path from the battery group 32 to the metal plate 65 is formed by the sheets 66 and others.

As shown in FIGS. 9, 13, etc., the bottom wall 42 of the case 33 includes a pair of leg portions 83. The leg portion 83A, which is one of the leg portions 83, is connected to the lower end of the side wall 46A. The leg portion 83A extends downward in the height direction from the protruding portion 52A, and protrudes toward the side where the metal plate 65 is located in the height direction with respect to the protruding portion 52A. Further, the leg portion 83A is adjacent to the outer sides of the metal plate 65 and the insulating film 68 in the depth direction (array direction). The gap between each of the metal plate 65 and the insulating film 68, and the leg portion (frame leg portion) 83A is located on the outer side of the gap between each of the sheets 66A to 66C and the protruding portion 52A in the array direction of the batteries 1. That is, the leg portion 83A is located on the outer side of the protruding end of the protruding portion 52A in the array direction of the batteries 1.

The leg portion 83B, which is the other of the leg portions 83, is connected to the lower end of the side wall 46B. The leg portion 83B extends downward in the height direction from the protruding portion 52B, and protrudes toward the side where the metal plate 65 is located in the height direction with respect to the protruding portion 52B. Further, the leg portion 83B is adjacent to the outer side of the metal plate 65 and the insulating film 68 in the depth direction (array direction). The gap between each of the metal plate 65 and the insulating film 68, and the leg portion (frame leg portion) 83B is located on the outer side of the gap between each of the sheets 66A to 66C and the protruding portion 52B in the array direction of the batteries 1. That is, the leg portion 83B is located on the outer side of the protruding end of the protruding portion 52B in the array direction of the batteries 1.

With the above-described configuration, in the battery module 31 of the present embodiment, the side wall 46A faces the outermost battery 1A of each of the battery rows 55 from one side in the array direction, and the side wall 46B faces the outermost battery 1B of each of the battery rows 55 from the side opposite to the side wall 46A in the array direction. That is, each of the side walls (frame side walls) 46A and 46B faces the battery row 55 from the outer side in the array direction. Then, a frame (frame portion) is formed by the side wall (frame side wall) 46A, the protruding portion (frame protruding portion) 52A, and the leg portion (frame leg portion) 83A. Additionally, a frame (frame portion) is formed by the side wall (frame side wall) 46B, the protruding portion (frame protruding portion) 52B, and the leg portion (frame leg portion) 83B. In the present embodiment, each of the two above-described frames is a part of the case 33 and has an electrical insulating property. Each of side walls 46A and 46B is a part of the peripheral wall 43 of the case 33.

As shown in FIGS. 10, 11, 14, etc., the bottom wall 42 of the case 33 includes a pair of leg portions 84. The leg portion 84A, which is one of the leg portions 84, is connected to the lower end of the side wall 45A. The leg portion 84A protrudes outward in the lateral direction with respect to the side wall 45A, and protrudes toward the side where the metal plate 65 is located (lower side) in the height direction with respect to the relay portion 53A. Further, the leg portion 84A is adjacent to the outer sides of the metal plate 65 and the insulating film 68 in the lateral direction. The gap between each of the metal plate 65 and the insulating film 68 and the leg portion 84A is located on the outer side of the gap between the sheet 66A and the relay portion 53A in the lateral direction of the battery module 31. That is, the leg portion 84A is located on the outer side of the protruding end of the relay portion 53A in the lateral direction.

The leg portion 84B, which is the other of the leg portions 84, is connected to the lower end of the side wall 45B. The leg portion 84B protrudes outward in the lateral direction with respect to the side wall 45B, and protrudes toward the side where the metal plate 65 is located (lower side) in the height direction with respect to the relay portion 53B. Further, the leg portion 84B is adjacent to the outer sides of the metal plate 65 and the insulating film 68 in the lateral direction. The gap between each of the metal plate 65 and the insulating film 68 and the leg portion 84B is located on the outer side of the gap between the sheet 66C and the relay portion 53B in the lateral direction of the battery module 31. That is, the leg portion 84B is located on the outer side of the protruding end of the relay portion 53B in the lateral direction.

As shown in FIGS. 9 to 11, etc., the battery system 30 includes a metallic base (cooling plate) 100 on which the battery module 31 is installed. Accordingly, the battery group 32, the case 33, the metal plate 65, the sheet 66, etc. are installed on the base 100. The base 100 has a higher thermal conductivity than that of the case 33, and has, for example, a thermal conductivity similar to that of the metal plate 65. In the battery system 30, the battery module 31 is used as, for example, a stationary power supply, a power supply for a railway vehicle, or the like. Here, in a case where the battery system 30 is used in, for example, a railway, a large number of battery modules similar to the battery module 31 and the like are provided, and a large number of battery modules are connected in series; as a result, high cooling performance is required. For this reason, the base 100 may be provided as a cooling plate in a portion where the battery module 31 is installed in the battery system 30, and for example, a flow path through which a cooling fluid including a cooling liquid, a cooling gas, and the like flows may be provided inside the base 100 serving as the cooling plate to perform forced cooling.

The base 100 is arranged on the side opposite to the side where the battery group 32 is located with respect to the metal plate 65 in the height direction of the battery module 31. Accordingly, the battery module 31 is installed on the base 100 from the upper side in the height direction. The metal plate 65 is arranged between each of the battery rows 55 and the base 100 in the height direction of the battery module 31. An insulating layer (not shown) having an electrical insulating property may be formed between the metal plate 65 and the base 100. In this case, the insulating layer is formed of a resin having plasticity and an electrical insulating property such as silicone grease, and the thickness of the insulating layer is preferably 1 mm or less, for example, about 0.2 mm to 0.5 mm. Instead of the insulating layer, a sheet may be provided between the metal plate 65 and the base 100. The sheet provided between the metal plate 65 and the base 100 is formed to have a thickness of about 0.5 mm, and is formed of a material having a higher thermal conductivity than the case 33. The sheet provided between the metal plate 65 and the base 100 may be formed of a material having an electrical insulating property, or may be formed of a conductive material such as graphite.

Since the battery system 30 is formed as described above, heat generated in each of the battery rows 55 is transferred to the base 100 through a corresponding one of the sheets 66, the insulating film 68, and the metal plate 65 in order. Therefore, a heat transfer path from the battery group 32 to the base 100 is formed by the sheets 66, the metal plate 65, and others.

As shown in FIGS. 2, 12, etc., in the battery module 31, the metal plate 65 is coupled to the bottom wall 42 of the case 33 by four coupling screws 71. Further, as shown in FIG. 3, in the battery system 30, the base 100 is coupled to the bottom wall 42 of the case 33 by four coupling screws 72. Each of the coupling screws 72 is located in the vicinity of a corresponding one of the coupling screws 71. In the example of FIGS. 2, 3, 12, etc., the metal plate 65 is coupled to the leg portion 84A of the case 33 by two of the four coupling screws 71, and the metal plate 65 is coupled to the leg portion 84B of the case 33 by the remaining two of the four coupling screws 71. Further, the base 100 is coupled to the leg portion 84A of the case 33 by two of the four coupling screws 72, and the base 100 is coupled to the leg portion 84B of the case 33 by the remaining two of the four coupling screws 72. Each of the coupling screws 71 and 72 has conductivity and is formed of a metal, for example. Each of coupling screws 71 and 72 is arranged on an outer side of the peripheral wall 43 of the case 33.

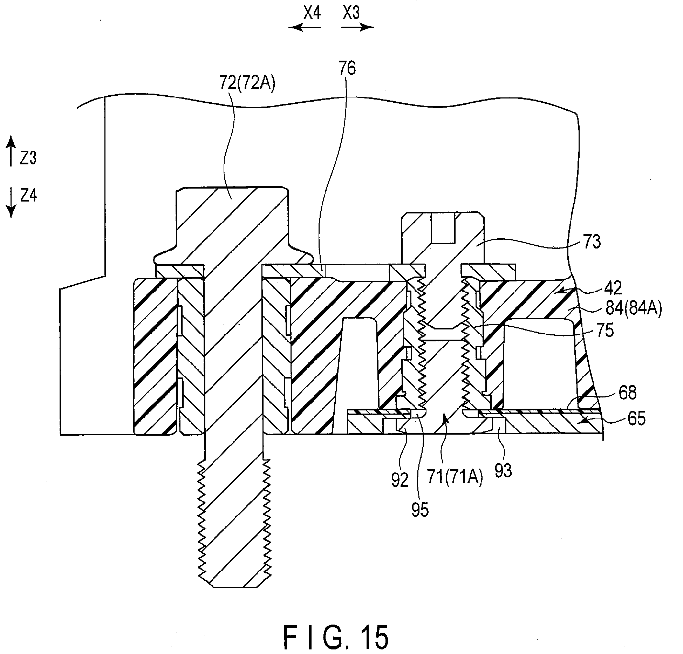

FIG. 15 shows the coupling screw 71A, which is one of the four coupling screws 71 coupling the metal plate 65 to the case 33, and a configuration in the vicinity thereof. In FIG. 15, the attachment structure of the coupling screw 71A to the metal plate 65 and the case 33 is shown, but the attachment structure of the coupling screw 71 other than the coupling screw 71A to the metal plate 65 and the case 33 is similar to that of the coupling screw 71A.

As shown in FIGS. 2, 4, etc., the metal plate 65 is provided with four protruding pieces 77 protruding outward in the lateral direction with respect to the peripheral wall 43 of the case 33. Further, as shown in FIG. 15, etc., two metal cylinders 75 are installed in the leg portion 84A of the case 33, and two metal cylinders 75 are installed in the leg portion 84B of the case 33. Each of the metal cylinders 75 is arranged without shifting or almost without shifting with respect to a corresponding one of the protruding pieces 77 in the depth direction and the lateral direction of the battery module 31. Accordingly, each of the metal cylinders 75 overlaps with the corresponding one of the protruding pieces 77. Each of the coupling screws 71 penetrates a corresponding one of the protruding pieces 77 and is engaged with a corresponding one of the metal cylinders 75, for example by screwing of a male screw and a female screw.

A head portion 92 of a corresponding one of the coupling screws 71 contacts each of the protruding pieces 77 from the lower side in the height direction of the battery module 31 (a side where the base 100 is located). In each of the protruding pieces 77, a concave portion 93 is formed on a surface facing downward. In each of the protruding pieces 77, the concave portion 93 is concave upward (the side where the battery group 32 is located) in the height direction of the battery module 31. In each of the coupling screws 71, an ultra low head bolt or the like having a minute height of the head portion 92 is used. Therefore, in each of the protruding pieces 77, the head portion 92 of the corresponding one of the coupling screws 71 is arranged in the concave portion 93, and the head portion 92 of each of the coupling screws 71 does not protrude downward with respect to the portion other than the concave portions 93 of the metal plate 65.

In each of the protruding pieces 77, a screw hole 95 is formed upward from the bottom of the concave portion 93. In each of the protruding pieces 77, a corresponding one of the coupling screws 71 is inserted through the screw hole 95. A diameter of the screw hole 95 is larger than an outer diameter of a portion of the coupling screw 71 other than the head portion 92, and the screw hole 95 is an unloaded hole. The sectional area of concave portion 93 perpendicular to the height direction of the battery module 31 is also larger than the sectional area perpendicular to the axial direction of the head portion 92 of the corresponding one of the coupling screws 71.

In the example of FIGS. 2, 4, 15, etc., the coupling screw 71A, which is one of the coupling screws 71, is electrically connected to the coupling screw 72A, which is one of the coupling screws 72 located near the coupling screw 71A. The coupling screws 71A and 72A are electrically connected via the metal cylinder 75, the coupling screw 73, and the relay plate 76. By electrically connecting the coupling screws 71A and 72A, the metal plate 65 and the base 100 are electrically connected. The coupling screws 71 other than the coupling screws 71A are not electrically connected to any of the coupling screws 72. Further, in one example, an adhesive formed of a conductive material is attached to the coupling screw 71A. In this case, the coupling screw 71A is bonded to the metal cylinder 75 via the adhesive, and is bonded to the metal plate 65 via the adhesive in the concave portion 93. This improves the reliability of electrical connection between the coupling screw 71A and the metal plate 65 and between the coupling screw 71A and the metal cylinder 75. Further, the configuration for electrically connecting the metal plate 65 and the base 100 is not limited to the configuration formed by the coupling screws 71A, 72A, etc. In one example, a sheet formed of a conductive material such as graphite may be provided between the metal plate 65 and the base 100 as described above, and the metal plate 65 and the base 100 may be electrically connected by the sheet.

As shown in FIGS. 2, 4, etc., a concave portion 78 concave inward in the lateral direction is formed in the metal plate 65. Each of the concave portions 78 is adjacent to a corresponding one of the four protruding pieces 77 on an inner side in the depth direction of the battery module 31. Further, as shown in FIGS. 3, 5, 6, etc., four screw holes 81 are formed in the case member 36 of the case 33. Each of the screw holes 81 is arranged without shifting or almost without shifting with respect to a corresponding one of the concave portions 78 in the depth direction and the lateral direction of the battery module 31. Accordingly, each of the concave portions 78 overlaps with a corresponding one of the screw holes 81. In the example of FIGS. 4, 5, etc., the case member (lower case member) 36 is coupled to the case member (upper case member) 37 via four coupling screws 82. Each of the coupling screws 82 is inserted through a corresponding one of the screw holes 81 through a corresponding one of the concave portions 78.

As shown in FIGS. 12 to 14, etc., in the battery module 31, a tape 85 is provided between the case 33 and the insulating film 68 in the height direction. The case 33 is attached to the metal plate 65 via the tape 85 in addition to the above-described four coupling screws 71. The tape 85 is a double-sided tape in which adhesive layers are formed on both surfaces of the base material. Examples of the material forming the base material of the tape 85 include a urethane compound, and the base material preferably has an independent bubble structure. Examples of the material forming the adhesive layer of the tape 85 include an acrylic resin. In addition, the tape 85 preferably has the above-described comparative tracking index (CTI) of 175 or more. Further, in the tape 85, it is more preferable that the comparative tracking indexes of both the base material and the adhesive layer be 175 or more. Since the comparative tracking index of the tape 85 is 175 or more, a short circuit or the like between each of the batteries 1 (battery row 55) and a conductor other than the battery via the tape 85 is effectively prevented. In the configuration in which the insulating film 68 closely contacts the metal plate 65 as described above, the case 33 is attached to the metal plate 65 by adhering to the insulating film 68 with the tape 85.

The tape 85 includes a pair of tape extended portions 86 (86A, 86B) and a pair of tape extended portions 87 (87A, 87B). The tape extended portions (first tape extended portions) 86 are arranged away from each other in the depth direction. The tape extended portions (second tape extended portions) 87 are arranged away from each other in the lateral direction. Each of the tape extended portions 86 extends continuously along the lateral direction between the tape extended portions 87. Each of the tape extended portions 87 extends continuously along the depth direction between the tape extended portions 86.

In the example of FIGS. 9 to 14, etc., the tape extended portion 86A, which is one of the pair of tape extended portions 86, is provided either between the side wall (frame side wall) 46A and the insulating film 68 in the height direction or between each of the protruding portions (frame protruding portions) 52A and the insulating film 68 in the height direction, and extends along the lateral direction. The tape extended portion 86A causes the side wall 46A and/or each of the protruding portions 52A (that is, the frame) to adhere to the insulating film 68 stacked on the metal plate 65. Additionally, the tape extended portion 86B, which is the other of the pair of tape extended portions 86, is provided either between the side wall (frame side wall) 46B and the insulating film 68 in the height direction or between each of the protruding portions (frame protruding portions) 52B and the insulating film 68 in the height direction, and extends along the lateral direction. The tape extended portion 86B causes he side wall 46B and/or each of the protruding portions 52B (that is, the frame) to adhere to the insulating film 68 stacked on the metal plate 65. Thus, in the configuration in which the insulating film 68 closely contacts the metal plate 65, each of the frames is attached to the metal plate 65.

The tape extended portion 87A, which is one of the pair of tape extended portions 87, is provided either between the side wall 45A and the insulating film 68 in the height direction or between the relay portion 53A and the insulating film 68 in the height direction, and extends along the depth direction. The tape extended portion 87A causes the side wall 45A and/or the relay portion 53A to adhere to the insulating film 68 stacked on the metal plate 65. Additionally, the tape extended portion 87B, which is the other of the pair of tape extended portions 87, is provided either between the side wall 45B and the insulating film 68 in the height direction or between the relay portion 53B and the insulating film 68 in the height direction, and extends along the depth direction. The tape extended portion 87B causes the side wall 45B and the relay portion 53B to adhere to the insulating film 68 stacked on the metal plate 65. Thus, in the configuration in which the insulating film 68 closely contacts the metal plate 65, either the side wall 45A, 45B or the relay portion 53A, 53B is attached to the metal plate 65.

In the example of FIGS. 10 to 12, etc., the tape 85 includes two tape extended portions (third tape extended portions) 88. The tape extended portions 88 are arranged between the pair of tape extended portions 87 in the lateral direction, and are arranged away from each other in the lateral direction. Further, each of the tape extended portions 88 is arranged away from each of the tape extended portions 87 in the lateral direction. Each of the tape extended portions 88 extends continuously along the depth direction between the tape extended portions 86. Each of the tape extended portions 88 is provided between a corresponding one of the partition walls 47 of the case 33 and the insulating film 68 in the height direction. Each of the tape extended portions 88 causes the corresponding one of the partition walls 47 to adhere to the insulating film 68 stacked on the metal plate 65. In one example, in the tape 85, only the tape extended portions 86 and 87 may be formed, and the tape extended portion 88 may not be formed. The tape 85 as a whole may have an integral structure, or may be formed of a plurality of separate members. For example, each of the tape extended portions 86 to 88 may be separate members. In this case, the tape extended portions 86 and 87 may overlap each other at a boundary portion between the tape extended portions 86 and 87, and the tape extended portions 86 and 87 may be discontinuous. In another example, the tape 85 may not be provided.

In the present embodiment, since the tape 85 is provided as described above, an extended portion of the tape 85 is formed over the entire circumference of the housing cavity 35 by the tape extended portions 86A, 86B, 87A, and 87B. The tape extended portions 86A, 86B, 87A, and 87B extend along the peripheral wall 43 of the case 33. The above-described four coupling screws 71 that couple the case 33 to the metal plate 65 are located on the outer peripheral side with respect to the tape extended portions 86 and 87 (extended portion of the tape 85 over the entire circumference of the housing cavity 35).

In the present embodiment, as described above, a main heat transfer path from the battery group 32 to the base 100 is formed through the sheet 66, the metal plate 65, and the insulating film 68. The metal plate 65 has a high thermal conductivity. Therefore, providing the metal plate 65 improves dissipation of heat generated in the battery group 32 to the base 100.

In the present embodiment, the base 100 serves as a GND, for example, when the battery system 30 is used in a railway vehicle. Since the metal plate 65 and the base 100 are electrically connected via the coupling screws 71A and 72A as described above, an electric potential difference is not generated between the metal plate 65 and the base 100. For this reason, the metal plate 65 of the battery module 31 is also a GND. In the battery system 30, during each of charging and discharging of the battery group 32, the exterior container 3 of each of the batteries 1 may have an electric potential different from that of the GND (the base 100 and the metal plate 65) due to conduction or the like through the electrolytic solution, etc. In this case, an electric potential difference (voltage) is generated between the base 100 and the battery group 32 (the exterior container 3 of the battery 1), or an electric potential difference (voltage) is generated between the metal plate 65 and the battery group 32 (the exterior container 3 of the battery 1). Therefore, it is important to sufficiently secure insulation of the battery group 32 (battery row 55) from each of the metal plate 65 and the base 100 and effectively prevent the occurrence of discharging between each of the metal plate 65 and the base 100, and the battery group 32.

Here, in the case where the battery system 30 is used in a railway vehicle, a large number of battery modules similar to the battery module 31 and the like are provided, and a large number of battery modules are connected in series. In this case, for example, if the battery module 31 is a battery module directly connected to the power supply, that is, if the battery module 31 is connected to the power supply without interposing another battery module, the electric potential difference between the battery group 32 and the GND (the base 100 and the metal plate 65) increases. Then, in a case where the electric potential difference between the battery group 32 and the GND is maximum, there is a possibility that the electric potential difference becomes the same as the rated insulation voltage of the battery system 30. In the battery system 30 used in the railway vehicle, the rated insulation voltage has a high value of, for example, 600 V or more. For example, when DC power is used in the railway vehicle, there is a battery system 30 in which the rated insulation voltage becomes any one of 600 V, 750 V, 1500 V, and 3000 V, for example. Therefore, it is important to sufficiently secure insulation of the battery group 32 (battery row 55) from each of the metal plate 65 and the base 100 even if an electric potential difference having the same magnitude as the rated insulation voltage is generated between the battery group 32 and the GND in the battery system 30 used in the railway vehicle.

In the present embodiment, each of the protruding portions (frame protruding portions) 52A and 52B protrudes inward in the array direction of the batteries 1 (depth direction) from a corresponding one of the side walls (frame side walls) 46A and 46B. Each of the protruding portions 52A and 52B is adjacent to a corresponding one of the outermost batteries 1A and 1B on the lower side in the height direction, and a corresponding one of the through holes 51 is formed adjacent to the inner side of each of the protruding portions 52A and 52B in the array direction of the batteries 1. At least a part of a corresponding one of the sheets 66 is arranged in each of the through holes 51. The insulating film 68 stacked on the metal plate 65 extends outward beyond the protruding end of each of the protruding portions 52 in the array direction of the batteries 1. Accordingly, in the vicinity of each of the protruding portions 52, a creepage distance between the battery group 32 (battery row 55) and the metal plate 65 (GND), that is, a creepage distance along a virtual line T1 (indicated by a two-dot chain line) in FIG. 13 increases. In the vicinity of each of the protruding portions 52, a spatial distance between the battery group 32 (battery row 55) and the metal plate 65 (GND) is the same as or substantially the same as the creepage distance. Therefore, the spatial distance between the battery group 32 (battery row 55) and the metal plate 65 (GND) also increases. By increasing the insulation distance (creepage distance and insulation distance) between the battery group 32 and the metal plate 65 in the vicinity of each of the protruding portions 52, insulation of the battery group 32 (battery row 55) from the metal plate 65 (GND) can be appropriately secured. In the present embodiment, the above-described insulation distance increases by the dimension in the depth direction (array direction of the batteries 1) of the portion where each of the protruding portions 52 and the insulating film 68 overlap.

In the present embodiment, each of the relay portions 53A and 53B protrudes to the inner side of the battery module 31 in the lateral direction from a corresponding one of the side walls 45A and 45B. A corresponding one of the through holes 51A and 51C is formed adjacent to the inner side of each of the relay portions 53A and 53B in the lateral direction. At least a part of a corresponding one of the sheets 66A and 66C is arranged in each of the through holes 51A and 51C. The insulating film 68 stacked on the metal plate 65 extends outward beyond the gap between each of the relay portions 53A and 53B and the corresponding one of the sheets 66 A and 66 C in the lateral direction. Accordingly, in the vicinity of each of the relay portions 53A and 53B, a creepage distance between the battery group 32 (battery rows 55A and 55C) and the metal plate 65 (GND), that is, a creepage distance along a virtual line T2 (indicated by a two-dot chain line) in FIG. 14 increases. In the vicinity of each of the relay portions 53A and 53B, a spatial distance between the battery group 32 (battery row 55) and the metal plate 65 (GND) is the same as or substantially the same as the creepage distance. Therefore, the spatial distance between the battery group 32 (battery row 55) and the metal plate 65 (GND) also increases. By increasing the insulation distance (creepage distance and spatial distance) between the battery group 32 and the metal plate 65 in the vicinity of each of the relay portions 53A and 53B, insulation of the battery group 32 from the metal plate 65 (GND) can be further appropriately secured.

In the battery module 31 of the present embodiment, the insulation distance between the battery group 32 and the metal plate 65, such as the creepage distance along the virtual lines T1 and T2, is set in correspondence with the rated insulation voltage of the battery system 30. Therefore, the creepage distance (insulation distance) along each of the virtual lines T1 and T2 is set in correspondence with the rated insulation voltage of the battery system 30. For example, in an environment where the pollution degree defined in IEC 62497-1 is PD2, every time the rated insulation voltage of the battery system 30 increases by 1 kv (1000 V), the insulation distance such as the creepage distance along each of the virtual lines T1 and T2 increases in a range of 5 mm to 10 mm.

In the present embodiment, each of the protruding portions (frame protruding portions) 52 protrudes inward in the array direction of the batteries 1 from a corresponding one of the side walls (frame side walls) 46, and the insulating film 68 extends outward beyond the protruding end of each of the protruding portions 52 in the array direction of the batteries 1, thereby increasing the insulation distance (creepage distance and spatial distance) between the battery group 32 and the metal plate 65 in the vicinity of each of the protruding portions 52. That is, the above-described insulation distance increases by the dimension in the depth direction (array direction of the batteries 1) of the portion where each of the protruding portions 52 and the insulating film 68 overlap. Therefore, even if the insulation distance between the battery group 32 and the metal plate 65 increases in the vicinity of each of the protruding portions 52, the size of the battery module 31 does not excessively increase.

Similarly, in the present embodiment, each of the relay portions 53A and 53B protrudes inward in the lateral direction of the battery module 31 from a corresponding one of the side walls 45, and the insulating film 68 extends outward beyond the protruding end of each of the relay portions 53A and 53B in the lateral direction, thereby increasing the insulation distance (creepage distance and spatial distance) between the battery group 32 and the metal plate 65 in the vicinity of each of the relay portions 53A and 53B. Therefore, even if the insulation distance between the battery group 32 and the metal plate 65 increases in the vicinity of each of the relay portions 53A and 53B, the size of the battery module 31 does not excessively increase.

In the present embodiment, the housing cavity 35 in which the battery group 32 is housed is surrounded by the peripheral wall 43 of the case 33 over the entire circumference in the circumferential direction. Therefore, the battery group 32 is appropriately insulated from a conductor and the like outside the battery module 31. Further, in the present embodiment, each of the coupling screws 71 and 72 is arranged on the outer side of the peripheral wall 43 of the case 33. Therefore, insulation of the battery group 32 from the coupling screws 71 and 72 and the like is also appropriately secured.

In the present embodiment, the sheet 66 having plasticity is sandwiched between the battery group 32 and the metal plate 65. Each of the sheets 66 closely contacts the battery group 32 and the insulating film 68. The sheet 66 has a higher thermal conductivity than the air and the case 33. Therefore, thermal transfer performance from the battery group 32 to the metal plate 65 is improved, and dissipation of heat generated in the battery group 32 to the base 100 is further improved.

In the present embodiment, a corresponding one of the sheets 66 closely contacts each of the battery rows 55 from the lower side in the height direction. In each of the battery rows 55, the contact area of the sheet 66 with each of the outermost batteries 1A and 1B on the outermost side in the array direction is smaller than the contact area of the sheet 66 with each of the batteries 1 other than the outermost batteries 1A and 1B. Here, in each of the battery rows 55, heat generated in the battery 1 arranged on the outer side in the array direction such as the outermost batteries 1A and 1B is easily dissipated through the side wall 46. On the other hand, in each of the battery rows 55, heat generated in the battery 1 arranged on the inner side in the array direction is unlikely to be dissipated through the side wall 46. In the present embodiment, in each of the battery rows 55, since the contact area of the sheet 66 with each of the outermost batteries 1A and 1B is smaller than the contact area of the sheet 66 with each of the batteries 1 other than the outermost batteries 1A and 1B, the heat generated in the battery 1 arranged on the inner side in the array direction is easily transferred to the metal plate 65 and the base 100 through the sheet 66 as compared with the heat generated in the battery such as the outermost batteries 1A and 1B. As a result, in each of the battery rows 55, the variation in temperature among the batteries 1 is suppressed to be small, and thus the progress of deterioration or the like of the battery group 32 (battery module 31) is suppressed to be small.

In the present embodiment, each of the leg portions (frame leg portions) 83 is adjacent to the metal plate 65 and the insulating film 68 on the outer side of the batteries 1 in the array direction. Each of the leg portions 83 is located on the outer side of the protruding end of each of the protruding portions 52 in the array direction. Further, in the present embodiment, each of the leg portions 84 is adjacent to the metal plate 65 and the insulating film 68 on the outer side of the battery module 31 in the lateral direction. Each of the leg portions 84 is located on the outer side of the protruding end of each of the relay portions 53 in the lateral direction. Therefore, the leg portions 83 and 84 prevent the edges of the metal plate 65 from being exposed to the outside of the case 33. Further, providing the leg portions 83 and 84 allows at least a part of each of the leg portions 83 and 84 to easily contact the base 100. This enables the battery module 31 to be stably installed on the base 100.

In the present embodiment, the tape 85 is provided between the case 33 and the insulating film 68 in the height direction, and the case 33 adheres to the insulating film 68 stacked on the metal plate 65 via the tape 85. Providing the tape 85 reduces an influence of thermal stress caused by a difference in thermal expansion between the case 33 and the metal plate 65. This effectively prevents breakage or the like of the case 33 during the use of the battery module 31, and appropriately secures insulation between the battery group 32 and the metal plate 65 for a long period of time.

In the present embodiment, the tape extended portion .86 of the tape 85 extends along the lateral direction either between the side wall 46 and the insulating film 68 or between each of the protruding portions (frame protruding portions) 52 and the insulating film 68. Each of the side walls 46 and/or the protruding portions 52 adheres to the insulating film 68 on the tape extended portion 86. This effectively prevents entry of water droplets, dust, and the like into the housing cavity 35 through between each of the protruding portions 52 and the insulating film 68 on the metal plate 65. Additionally, in the present embodiment, the tape extended portion 87 of the tape 85 extends along the depth direction either between the side wall 45 and the insulating film 68 or between each of the relay portions 53A and 53B and the insulating film 68. Each of the side walls 45 and/or the relay portions 53A and 53B adheres to the insulating film 68 on the tape extended portion 87. This effectively prevents entry of water droplets, dust, and the like into the housing cavity 35 through between each of the relay portions 53 and the insulating film 68 on the metal plate 65. Further, providing the tape 85 as described above enables conductive grease to be used between the metal plate 65 and the base 100 instead of the insulating layer. That is, providing the tape 85 effectively prevents entry of the conductive grease into the housing cavity 35.

As described above, in the present embodiment, since entry of water droplets, dust, and the like into the housing cavity 35 is effectively prevented, contamination from the outside of the housing cavity 35 in which the battery group 32 is arranged is effectively prevented. This enables the housing cavity 35 to have, for example, the pollution degree of PD1 or PD2 defined in IEC 62497-1. By arranging the battery group 32 in an environment with a low pollution degree, it becomes easy to secure insulation between the battery group 32 and the metal plate 65, and it becomes easy to secure insulation between the battery group 32 and a conductor outside the battery module 31.

In the present embodiment, the metal plate 65 is coupled to the case 33 via the coupling screw 71 in addition to the tape 85. This effectively prevents the metal plate 65 and the insulating film 68 from being peeled from the case 33. Further, the fastening force of the coupling screw 71 causes a pressure to act on the tape 85 sandwiched between the metal plate 65 and the case 33. Thus, the tape 85 firmly contacts each of the case 33 and the insulating film 68 on the metal plate 65. Further, in the present embodiment, the screw hole 95 through which each of the coupling screws 71 is inserted on the metal plate 65 is an unloaded hole. This reduces the influence of thermal stress on each of the coupling screws 71.

In the present embodiment, the concave portions 62 are formed in each of the edges E3 and E4 of each of the through holes 51. Each of the concave portions 62 is concave toward the outer peripheral side of the through hole 51. Each of the sheets 66 is sandwiched between the battery group 32 and the metal plate 65 to be crushed in the height direction while stretching in a direction perpendicular or substantially perpendicular to the height direction. Providing the concave portions 62 allows a portion stretching in the direction perpendicular or substantially perpendicular to the height direction in each of the sheets 66 to enter each of the concave portions 62. Further, providing the concave portions 62 enables the sheet 66 to be formed in a state where a portion other than the concave portion 62 of the through hole 51 is almost filled with the sheet 66. This makes it possible to increase the contact area of the sheet 66 with each of the battery rows 55. Increasing the contact area of the sheet 66 with each of the battery rows 55 improves thermal transfer performance from the battery group 32 to the metal plate 65.

Providing the concave portion 62 allows each of the sheets 66 to be arranged in a corresponding one of the through holes 51 even when the sheet 66 is formed in a rectangular sheet having four corners at right angles or substantially right angles. That is, there is no need for chamfering or the like of the four corners of the sheet 66. This saves labor and cost for manufacturing each of the sheets 66. Further, in the present embodiment, the bottom of each of the concave portions 62 is formed in a curved surface shape (R surface shape). For this reason, even if the through hole 51 is formed in the bottom wall 42 of the case 33, an external force generated by vibration or impact and thermal stress generated by a temperature change are alleviated, thus effectively preventing breakage or the like of the case 33. Thus, insulation between the battery group 32 and the metal plate 65 is appropriately secured for a long period of time.

In each of the battery rows 55, the outermost battery 1A is bonded to at least one of a corresponding one of the protruding portions 52A and the side wall 46A via an adhesive (for example, 91). Additionally, in each of the battery rows 55, the outermost battery 1B is bonded to at least one of a corresponding one of the protruding portions 52B and the side wall 46B via an adhesive (for example, 91). As a result, in each of the battery rows 55, the outermost batteries 1A and 1B are firmly fixed to the case 33. When each of the outermost batteries 1A and 1B is bonded to a corresponding one of the side walls 46, dissipation of heat generated in the battery group 32 is further improved by cooling the side wall 46 with the air or the like.

In each of the through holes 51, each of the concave portions 62 is concave to one side in the lateral direction on a corresponding one of the edges E3 and E4. For this reason, a large area for applying the adhesive is secured in each of the protruding portions (frame protruding portions) 52 even if the concave portion 62 is provided. This causes each of the outermost batteries 1A and 1B to be firmly fixed to a corresponding one of the protruding portions 52 by the adhesive (for example, 91).

In the present embodiment, one or more segmentation plates 56 are formed in each of the relay portions 53, and in each of the relay portions 53, the segmentation plates 56 protrude upward in the height direction. In each of the battery rows 55, an appropriate spatial distance between the batteries 1 adjacent in the array direction is secured by the segmentation plate 56. Further, providing the segmentation plates 56 increases the strength of the case 33.

In the present embodiment, even when each of the batteries 1 expands due to the use of the battery module 31, the partition plate 57 effectively prevents the batteries 1 adjacent in the array direction from coming into contact with each other. This effectively prevents occurrence of a short circuit between the batteries 1 adjacent in the array direction. In the present embodiment, a plate connecting body 60 is formed from the three partition plates 57A to 57C. Forming the three partition plates 57 integrally reduces labor, cost, and the like for manufacturing the partition plate 57.

In the present embodiment, the plate protrusion 63 is provided in each of the partition plates 57. In each of the regions 48, the plate protrusion 63 of each of the partition plates 57 is arranged between a corresponding pair of the segmentation plates 56 in the lateral direction. This effectively prevents each of the partition plates 57 from interfering with the segmentation plate 56 in the housing cavity 35.

In the present embodiment, the inclined edge 64 is formed in each of the two partition plates 57A and 57C at both ends of the plate connecting body 60. Here, in the work of arranging the battery group 32 and the partition plate 57 in the housing cavity 35 of the case 33, the battery group 32 (battery row 55) and the partition plate 57 are inserted into the case member 37 in a state where the top wall 41 of the case 33 is located vertically lower than the housing cavity 35. At this time, after the battery group 32 is inserted into the case member 37, each partition plate 57 is inserted between the batteries 1 adjacent in the array direction. Then, after the battery group 32 and the partition plate 57 are inserted into the case member 37, the case member (lower case member) 36 is coupled to the case member (upper case member) 37.

Since the work of arranging the battery group 32 and the partition plate 57 in the housing cavity 35 is performed as described above, the plate connecting body 60 integrating the three partition plates 57A to 57C is inserted into the case member 37 such that the edge where the inclined edge 64 is formed enters first in a state where the plate protrusion 63 protrudes vertically upward. At this time, the inclined edge 64 is provided in each of the partition plates 57A and 57C, thereby effectively preventing the interference of the plate connecting body 60 with the case member 37, and improving the insertability of the plate connecting body 60.

### (Modification)

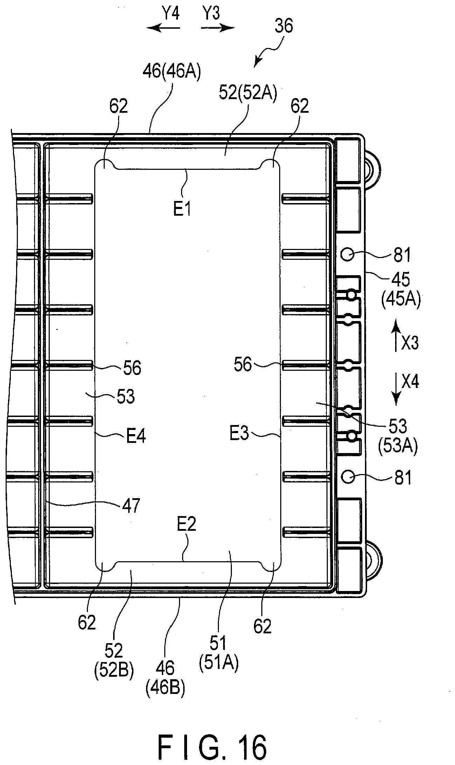

The concave portion 62 formed in each of the through holes 51 is not limited to the configuration of the above-described embodiment and the like. In a first modification shown in FIG. 16, two concave portions 62 are formed in each of edges E1 and E2 of each of through holes 51. In the present modification, each of the concave portions 62 is concave outward in the depth direction of a case 33 and is concave toward the outer peripheral side of the through hole 51. Also in the present modification, the bottom of each of the concave portions 62 is formed in a curved surface shape (R surface shape) . In each of the edges E1 and E2, one of the two concave portions 62 is formed at the end on a side where an edge E3 is located, and the other of the two concave portions 62 is formed at the end on a side where an edge E4 is located. Also in the present modification, providing the concave portion 62 allows a portion stretching in the direction perpendicular or substantially perpendicular to the height direction in each of sheets 66 to enter each of the concave portions 62.

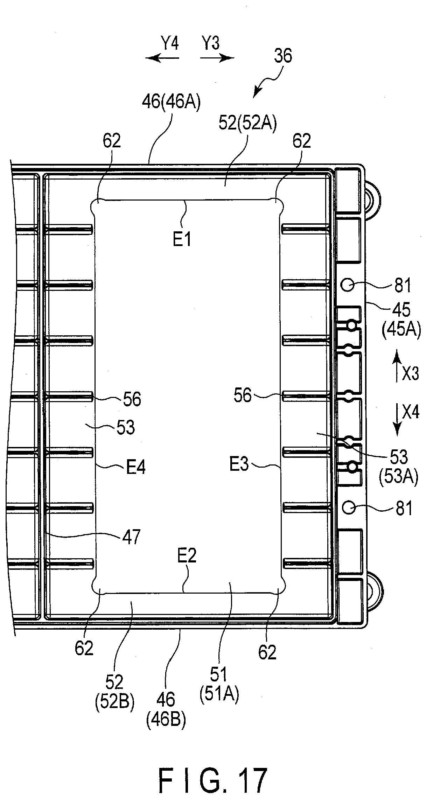

In a second modification shown in FIG. 17, a concave portion 62 is formed in each of four corners of each of through holes 51. In the present modification, each of the concave portions 62 is concave in a direction inclined with respect to both the depth direction and the lateral direction of a case 33 and is concave toward the outer peripheral side of the through hole 51. Also in the present modification, the bottom of each of the concave portions 62 is formed in a curved surface shape (R surface shape) . Also in the present modification, providing the concave portion 62 allows a portion stretching in the direction perpendicular or substantially perpendicular to the height direction in each of the sheets 66 to enter each of the concave portions 62.

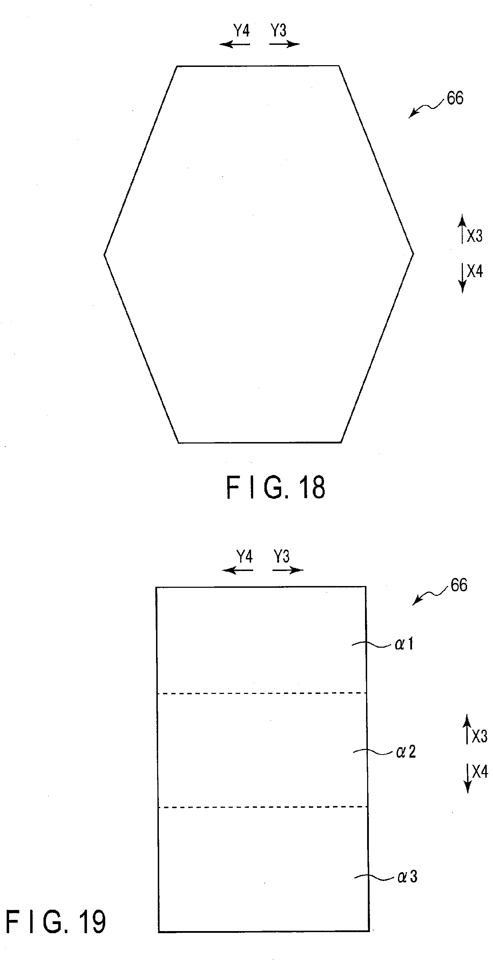

In a third modification shown in FIG. 18, in each of sheets 66, the width (dimension of the battery module 31 in the lateral direction) changes along the depth direction of a battery module 31. In the sheet 66 according to the present modification, a portion located on the inner side in the depth direction (array direction of the batteries 1) has a larger width. Therefore, in each of battery rows 55, a battery 1 on the inner side in the array direction has a larger contact area with the sheet 66. As a result, heat generated in the battery 1 arranged on the inner side in the array direction is more easily transferred to a metal plate 65 and a base 100 through the sheet 66 than the heat generated in the battery 1 arranged on the outer side in the array direction such as outermost batteries 1A and 1B. Therefore, in each of the battery rows 55, the variation in temperature among the batteries 1 can be suppressed to be small.

In a fourth modification shown in FIG. 19, each of sheets 66 is divided into three regions α1 to a3 based on the thermal conductivity. The regions α1 and α3 are adjacent to the outside of the region α2 in the depth direction of a battery module 31. The region α3 is located on the side opposite to the region α1 across the region α2. In each of the sheets 66, the region α1 forms an end on one side in the depth direction of the battery module 31, and the region α3 forms an end on the other side in the depth direction of the battery module 31. In the present modification, the thermal conductivity of the region α2 is larger than the thermal conductivity of each of the regions α1 and α3. For example, when the sheet 66 is formed of a mixed material of a resin and alumina particles, the thermal conductivity of the region α2 can be made larger than the thermal conductivity of each of the regions α1 and α3 by making the ratio of the resin and the alumina particles in the region α2 different from that in the regions α1 and α3. In addition, the regions α1 to α3 do not need to be formed in one sheet 66, and may be divided into three regions α1 to α3 to form three sheets.

Since the thermal conductivity of the region α2 is larger than the thermal conductivity of each of the regions α1 and α3 as described above, in each of battery rows 55 of the present modification, heat generated in a battery 1 arranged on the inner side in the array direction is more easily transferred to a metal plate 65 and a base 100 through the sheet 66 than the heat generated in the battery 1 arranged on the outer side in the array direction such as outermost batteries 1A and 1B. Therefore, in each of the battery rows 55, the variation in temperature among the batteries 1 can be suppressed to be small.

In the above-described embodiment, etc., each of the sheets 66 as a whole is arranged in a corresponding one of the through holes 51, but it is not limited thereto. In one modification, a part of each of the sheets 66 may be arranged outside of the corresponding one of the through holes 51. In this case, in each of regions 48, a part of the sheet 66 is arranged adjacent to one of the pair of protruding portions 52 and the pair of relay portions 53 on the upper side in the height direction. In this case, when the low hardness sheet 66 is crushed, the sheet 66 enters the gap between the batteries 1 adjacent in the array direction, and in each of the batteries 1, the sheet 66 is brought into close contact with not only a bottom wall 7 of an exterior container 3 but also a peripheral wall 8. This improves heat dissipation from the battery row 55.

In the above-described embodiment, etc., each of the partition walls 47 is formed integrally with the case 33, but each of the partition walls 47 may be formed of a member different from the case 33. In a modification, the partition wall 47 may not be provided.

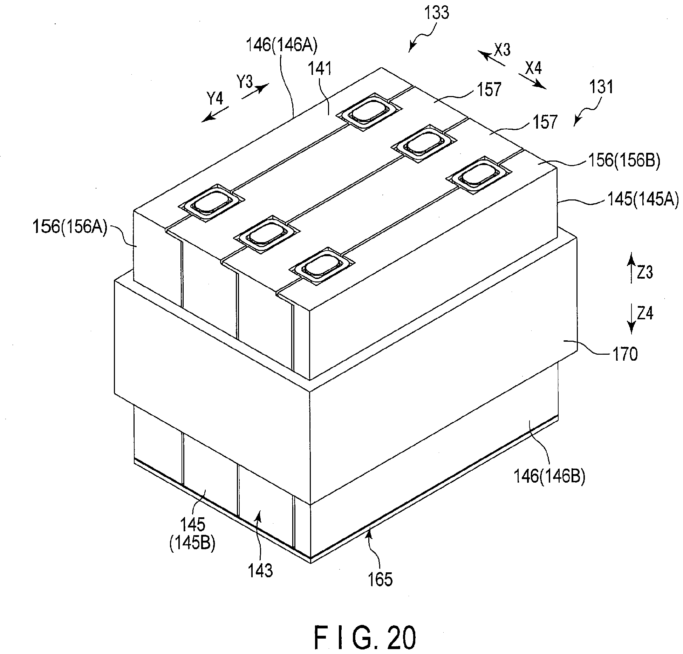

In a battery module 131 of a fifth modification shown in FIGS. 20 to 24, the case 33 is not provided. In the present modification, the battery module 131 is provided with a frame assembly 133 instead of the case 33. The frame assembly 133 is formed of a material having an electrical insulating property, and examples of the material forming the frame assembly 133 include a material similar to the case 33. Also in the present modification, in the battery module 131, a depth direction (direction indicated by arrows X3 and X4), a lateral direction (direction indicated by arrows Y3 and Y4) intersecting (perpendicular or approximately perpendicular to) the depth direction, and a height direction (direction indicated by arrows Z3 and Z4) intersecting (perpendicular or approximately perpendicular to) both the depth direction and the lateral direction are defined, as in the above-described embodiment, etc.

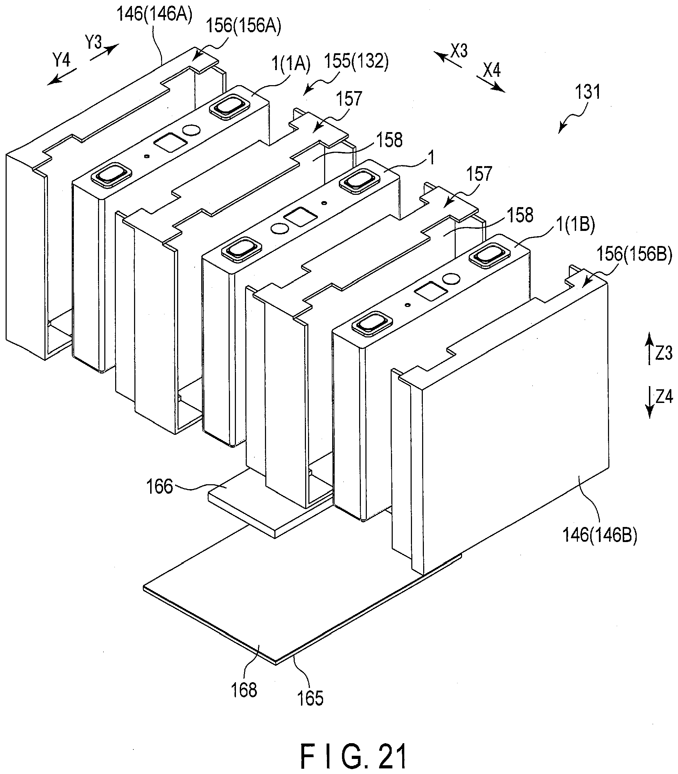

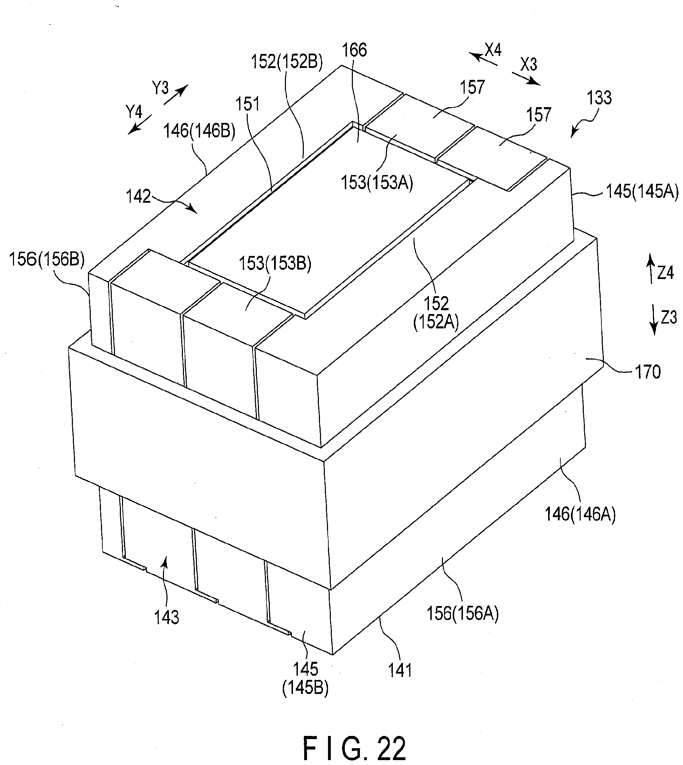

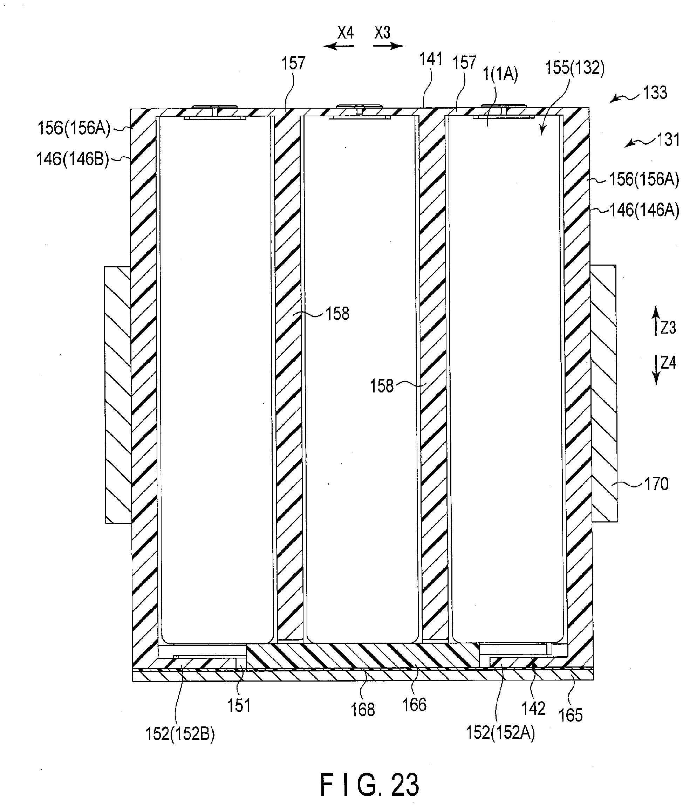

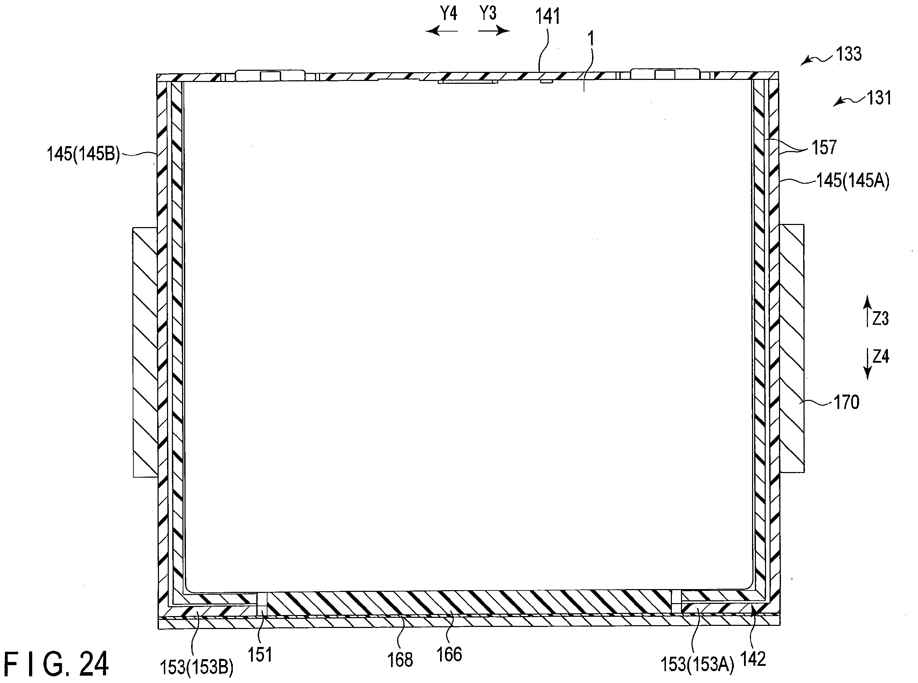

Here, FIGS. 20 and 22 are perspective views, and FIG. 21 shows the battery module 131 in a state of being disassembled into components. In FIGS. 20 and 22, the viewing directions are different from each other. FIG. 23 shows a cross section perpendicular or substantially perpendicular to the lateral direction of the battery module 131, and FIG. 24 shows a cross section perpendicular or substantially perpendicular to the depth direction of the battery module 131. Also in the present modification, the battery module 131 includes a battery group 132, and the battery group 132 includes a plurality of batteries 1. In the present modification, the battery group 132 is formed of a battery row 155, and the plurality of batteries 1 are arrayed in the battery row 155. In the example of FIG. 21, etc., three batteries 1 are arrayed in the battery row 155. Also in the present modification, the array direction of the batteries 1 in the battery row 155 coincides with or substantially coincides with the depth direction of the battery module 131.

In the present modification, the frame assembly 133 is formed by assembling a pair of frames 156 (156A, 156B) and one or more partition members 157. In the example of FIGS. 20 to 22, etc., two partition members 157 are provided. The frame assembly 133 includes a top wall (upper wall) 141, a bottom wall 142, and a peripheral wall 143. The battery row 155 (battery group 132) is housed in an inner cavity of the frame assembly 133 defined by the top wall 141, the bottom wall 142, and the peripheral wall 143. In the frame assembly 133, the top wall 141 and the bottom wall 142 face each other across the inner cavity in the height direction. In the present modification, each of the top wall 141 and the bottom wall 142 is formed by the pair of frames 156 and the two partition members 157. The peripheral wall 143 extends along the height direction between the top wall 141 and the bottom wall 142. The peripheral wall 143 surrounds the inner cavity over the entire periphery in the circumferential direction of the battery module 131.

The peripheral wall 43 includes a pair of side walls 145 (145A, 145B) and a pair of side walls 146 (146A, 146B). The side walls 145 face each other across the inner cavity in the lateral direction. The side walls 146 face each other across the inner cavity in the depth direction. Each of the side walls 145 extends along the depth direction between the side walls 146. Each of the side walls 146 extends along the depth direction between the side walls 145. In the present modification, the side wall 146A, which is one of the pair of side walls 146, is formed of the frame 156A, which is one of the pair of frames 156, and the side wall 146B, which is the other of the pair of side walls 146, is formed of the frame 156B, which is the other of the pair of frames 156. Each of the side wall 145 is formed by the pair of frames 156 and the two partition members 157.

In the present modification, an end plate (end plate) 170 is provided in the battery module 131. The end plate 170 extends over the entire circumference in the circumferential direction of the battery module 131 and contacts the peripheral wall 143 of the frame assembly 133 from the outer peripheral side. Accordingly, the peripheral wall 143 of the frame assembly 133 is pressed toward the inner peripheral side by the end plate 170 over the entire circumference in the circumferential direction of the battery module 131. In FIG. 21, the end plate 170 is omitted.

A through hole 151 is formed in the bottom wall 142. The inner cavity of the frame assembly 133 opens to the outside of the frame assembly 133 through the through hole 151. The bottom wall 142 includes a pair of protruding portions 152 (152A, 152B) and a pair of relay portions 153 (153A, 153B).

Each of the pair of protruding portions 152 protrudes inward in the depth direction from a corresponding one of the side walls 146. Here, the protruding portion 152A, which is one of the pair of protruding portions 152, protrudes from the side wall 146A to a side where the side wall 146B is located, and the protruding portion 152B, which is the other of the pair of protruding portions 152, protrudes from the side wall 146B to a side where the side wall 146A is located. In the present modification, the protruding portion 152A is formed of the frame 156A, and the protruding portion 152B is formed of the frame 156B. The through hole 151 is formed between the pair of protruding portions 152 in the depth direction. A protruding end of each of the protruding portions 152 forms a part of an edge of the through hole 51. Accordingly, the through holes 151 are formed adjacent to the inner sides of the pair of protruding portions 152 in the depth direction (an array direction of the batteries 1).

Each of the pair of relay portions 153 relays between the protruding portions 152. Each of the relay portions 153 extends along the depth direction between the protruding portions 152. The through hole 151 is formed between the pair of relay portions 153 in the lateral direction. Here, the relay portion 153A, which is one of the pair of relay portions 153, protrudes from the side wall 145A to a side where the side wall 145B is located, and the relay portion 153B, which is the other of the pair of relay portions 153, protrudes from the side wall 145B to a side where the side wall 145A is located. Accordingly, each of the relay portions 153 protrudes inward in the lateral direction from a corresponding one of the side walls 145. In the present modification, each of the relay portions 153 is formed by the pair of frames 156 and the two partition members 157.

In the present modification, in the battery row 155 (battery group 132), the depth direction of each of the batteries 1 coincides or approximately coincides with the depth direction of the battery module 131, and the lateral direction of each of the batteries 1 coincides or approximately coincides with the lateral direction of the battery module 131. Each of the batteries 1 is arranged in the inner cavity of the frame assembly 133 in a state where the outer surface of a bottom wall 7 faces a side where the bottom wall 142 of the frame assembly 133 is located. In the battery row 155, a partition plate portion (separator portion) 158 is provided between the batteries 1 adjacent to each other in the array direction (depth direction of the battery module 131). One or more partition plate portions 158 are provided in the battery row 55, and in the example of FIG. 21, etc., two partition plate portions 158 are provided in the battery row 55. In the present modification, the partition plate portion 158 is formed by a corresponding one of the partition members 157. Therefore, the batteries 1 adjacent in the array direction are electrically insulated from each other by a corresponding one partition plate portion 158 of the partition member 157.

Here, as in the above-described embodiment, etc., in the battery row 55, outermost batteries 1A and 1B on the outermost sides in the array direction among the plurality of batteries 1 are defined. In the battery module 131 of the present modification, the side wall (frame side wall) 146A formed by the frame 156A faces the outermost battery 1A of the battery row 155 from one side in the array direction. The side wall (frame side wall) 146B formed by the frame 156B faces the outermost battery 1B of the battery row 55 from the side opposite to the side wall 146A in the array direction. That is, each of the side walls (frame side walls) 146A and 146B faces the battery row 55 from the outer side in the array direction. In each of the frames 156, the protruding portion (frame protruding portion) 152 protrudes inward in the array direction of the batteries 1 from the side wall 146 (frame side wall).

The frame 156A is engaged with the partition member 157 arranged between the outermost battery 1A and the battery 1 adjacent to the outermost battery 1A in the array direction. Thus, the frame 156A is assembled to the corresponding partition member 157. Additionally, the frame 156B is engaged with the partition member 157 arranged between the outermost battery 1B and the battery 1 adjacent to the outermost battery 1B in the array direction. Thus, the frame 156B is assembled to the corresponding partition member 157. Further, the end plate 170 contacts each of the frames 156 from the outer side in the array direction of the batteries 1 (depth direction) . Each of the frames 156 is pressed inward in the array direction of batteries 1 by the end plate 170.

The battery module 131 includes a metal plate (bottom plate) 165 on which the battery row 155 (battery group 132) and the frame assembly 133 are installed. The metal plate (heat sink) 165 has a higher thermal conductivity than the frame assembly 133, and is formed of, for example, the same material as the metal plate 65 in the above-described embodiment, etc. The metal plate 165 is attached to the frame assembly 133 from the side where the bottom wall 142 is located (lower side) in the height direction of the battery module 131.

The battery module 131 includes a sheet 166. The sheet 166 has plasticity and an electrical insulating property, and has a higher thermal conductivity than the frame assembly 133. The sheet 166 is formed of, for example, the same material as the sheet 66 of the above-described embodiment, etc. The sheet 166 is sandwiched between the battery row 155 (battery group 132) and the metal plate 165 in the height direction of the battery module 131, and the metal plate 165 is arranged on the lower side of the sheet 166 in the height direction (the side opposite to the battery row 155). At least a part of the sheet 166 is arranged in the through hole 151. The sheet 166 closely contacts the battery row 155 from a side where the metal plate 165 is located (lower side) in the height direction. In the through hole 151, a gap may be formed between the sheet 166 to be arranged and the protruding end of each of the protruding portions 152 for convenience of design and manufacturing. Similarly, in the through hole 151, a gap may be formed between the sheet 166 to be arranged and the protruding end of each of the relay portions 153 for convenience of design and manufacturing.

In the battery module 131, an insulating film 168 is formed on a surface of the metal plate 165 facing a side where the battery group 32 is located (surface facing upward). The insulating film 168 is formed between the sheet 166 and the metal plate 165 in the height direction of the battery module 31, and is adjacent to the lower side of the sheet 166 in the height direction. The insulating film 168 has an electrical insulating property and a high thermal conductivity, and is formed of, for example, the same material as the insulating film 68 of the above-described embodiment, etc. The insulating film 168 is stacked on a side where the battery row 155 (battery group 132) is located (upper side in the height direction) with respect to the metal plate 165. In FIG. 22, the metal plate 165 and the insulating film 168 are omitted.

The metal plate 165 and the insulating film 168 extend continuously in the depth direction (array direction) from the protruding end of the protruding portion 152A to the protruding end of the protruding portion 152B. Further, the metal plate 165 and the insulating film 168 extend to a position on an outer side of the protruding end of each of the protruding portions 152 in the depth direction. Accordingly, the metal plate 165 and the insulating film 168 extend outward beyond the protruding end of each of the protruding portions 152 in the array direction of the batteries 1. For this reason, the insulating film 168 is adjacent to each of the protruding portions 152 of the frame assembly 133 on the lower side in the height direction. The insulating film 168 is formed between each of the protruding portions 152 and the metal plate 165 in the height direction.

The metal plate 165 and the insulating film 168 extend continuously in the lateral direction from the protruding end of the relay portion 153A to the protruding end of the relay portion 153B. Further, the metal plate 165 and the insulating film 168 extend to a position on an outer side of the protruding end of each of the relay portions 153 in the lateral direction. Accordingly, the metal plate 165 and the insulating film 168 extend outward beyond the protruding end of each of the relay portions 153 in the lateral direction of the battery module 131. For this reason, the insulating film 168 is adjacent to each of the relay portions 153 of the frame assembly 133 on the lower side in the height direction. The insulating film 168 is formed between each of the relay portions 153 and the metal plate 165 in the height direction.

Since the battery module 131 is formed as described above, each of the sheet 166, and the protruding portion 152 and the relay portion 153 of the frame assembly 133 is located between the battery row 155 and the metal plate 165 in the height direction of the battery module 131. In the battery module 131, heat generated in each of the battery rows 155 is transferred to the metal plate 165 through the sheet 166 and the insulating film 68. Further, the battery module 131 is installed on the base (100) or the like described above in the battery system (30). The heat transferred from the battery row 155 to metal plate 165 is transferred to the base (100). In the present modification, each of the batteries 1 may be bonded to any corresponding one or more of the protruding portion 152 and the relay portion 153 via an adhesive, as in the above-described embodiment, etc. Further, each of the batteries 1 may be bonded to any corresponding one or more of the side walls 145 and 146 via an adhesive. In the present modification, in each of the batteries 1, each of the side walls 12 may be bonded to any corresponding opposing surface of the frame 156 and the partition member 157 via an adhesive.

In the present modification, each of the protruding portions (frame protruding portions) 152 protrudes inward in the array direction (depth direction) of the batteries 1 from a corresponding one of the side walls (frame side walls) 146. Each of the protruding portions 152 is adjacent to a corresponding one of the outermost batteries 1A and 1B on the lower side in the height direction, and the through hole 151 is formed adjacent to the inner side of the pair of protruding portions 152 in the array direction of the batteries 1. At least a part of the sheet 166 is arranged in the through hole 151. Further, the insulating film 168 stacked on the metal plate 165 extends outward beyond the protruding end of each of the protruding portions 152 in the array direction of the batteries 1. Therefore, also in the present modification, the insulation distance (creepage distance and spatial distance) between the battery row 155 (battery group 132) and the metal plate 165 increases in the vicinity of each of the protruding portions 152. Accordingly, also in the present modification, insulation of the battery row 155 from the metal plate 165 can be appropriately secured. In the present modification, the above-described insulation distance increases by the dimension in the depth direction (array direction of the batteries 1) of the portion where each of the protruding portions 152 and the insulating film 168 overlap.

In the present modification, each of the relay portions 153 protrudes from a corresponding one of the side walls 145 to the inner side of the battery module 131 in the lateral direction. The through hole 151 is formed adjacent to the inner side of the pair of relay portions 153 in the lateral direction. At least a part of the sheet 166 is arranged in the through hole 151. Further, the insulating film 168 stacked on the metal plate 165 extends outward beyond the protruding end of each of the relay portions 153 in the lateral direction. Therefore, also in the present modification, the insulation distance (creepage distance and spatial distance) between the battery row 155 (battery group 132) and the metal plate 165 increases in the vicinity of each of the relay portions 153. Accordingly, also in the present modification, insulation of the battery row 155 from the metal plate 165 can be appropriately secured. Also in the present modification, insulation of the battery row 155 (battery group 132) from the metal plate 165 can be appropriately secured without excessively increasing the size of the battery module 131, as in the above-described embodiment, etc. Further, in the battery module 131 of the present modification, the partition members 157 adjacent in the array direction are engaged with each other on each of the side walls 146 of the frame assembly 133, thereby forming a portion where the adjacent partition members 157 overlap each other. In each of the side walls 146, the partition member 157 and the frame 156 adjacent in the array direction are engaged with each other, thereby forming a portion where the partition member 157 and the frame 156 adjacent overlap each other. The portion where the partition members 157 overlap each other and the portion where the partition member 157 and the frame 156 overlap each other increase an insulation distance (creepage distance and spatial distance) of the battery row 155 from a conductor or the like located apart in the lateral direction. Accordingly, insulation of the battery row 155 from the conductor is appropriately secured without providing a case or the like. Additionally, in each of the relay portions 153, a portion where the adjacent partition members 157 overlap each other and a portion where the partition member 157 and the frame 156 adjacent overlap each other are formed, as in the side walls 146. Accordingly, insulation of the battery row 155 from the conductor is further appropriately secured even with a configuration without the case or the like.

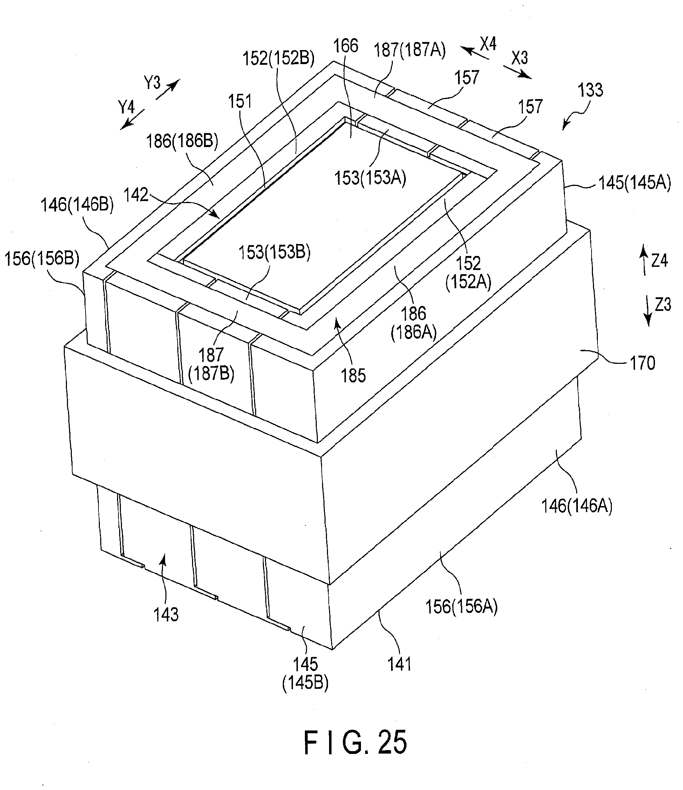

In the battery module 131 of the sixth modification shown in FIG. 25, the frame assembly 133 is provided, as in the fifth modification. However, in the battery module 131 of the present modification, a tape 185 is provided between the frame assembly 133 and the insulating film 168 in the height direction. The frame assembly 133 is attached to the metal plate 165 via the tape 185. The tape 185 is formed, for example, in the same manner as the tape 85 of the above-described embodiment, etc. The frame assembly 133 is attached to the metal plate 165 by adhering to the insulating film 168 with the tape 185. In FIG. 25, the metal plate 165 and the insulating film 168 are omitted.

The tape 185 includes a pair of tape extended portions 186 (186A, 186B) and a pair of tape extended portions 187 (187A, 187B) . The tape extended portions (first tape extended portions) 186 are arranged away from each other in the depth direction. The tape extended portions (second tape extended portions) 187 are arranged away from each other in the lateral direction. Each of the tape extended portions 186 extends continuously along the lateral direction between the tape extended portions 187. Each of the tape extended portions 187 extends continuously along the depth direction between the tape extended portions 186.

In the present modification, the tape extended portion 186A, which is one of the pair of tape extended portions 186, is provided either between the side wall (frame side wall) 146A and the insulating film 168 in the height direction or between the protruding portion (frame protruding portion) 152A and the insulating film 168 in the height direction, and extends along the lateral direction. The tape extended portion 186A causes the side wall 146A and/or the protruding portion 152A to adhere to the insulating film 168 stacked on the metal plate 165. Additionally, the tape extended portion 186B, which is the other of the pair of tape extended portions 186, is provided either between the side wall (frame side wall) 146B and the insulating film 168 in the height direction or between the protruding portion (frame protruding portion) 152B and the insulating film 168 in the height direction, and extends along the lateral direction. The tape extended portion 186B causes the side wall 146B and/or the protruding portion 152B to adhere to the insulating film 168 stacked on the metal plate 165. Thus, in the configuration in which the insulating film 168 closely contacts the metal plate 165, each of the protruding portions 152 is attached to the metal plate 165.

The tape extended portion 187A, which is one of the pair of tape extended portions 187, is provided either between the side wall 145A and the insulating film 168 in the height direction or between the relay portion 153A and the insulating film 168 in the height direction, and extends along the depth direction. The tape extended portion 187A causes each of the side wall 145A and/or the relay portion 153A to adhere to the insulating film 68 stacked on the metal plate 165. Additionally, the tape extended portion 187B, which is the other of the pair of tape extended portions 187, is provided either between the side wall 145B and the insulating film 168 in the height direction or between the relay portion 153B and the insulating film 168, and extends along the depth direction. The tape extended portion 187B causes the side wall 145B and/or the relay portion 153B to adhere to the insulating film 168 stacked on the metal plate 165. Thus, in the configuration in which the insulating film 168 closely contacts the metal plate 165, each of the relay portions 153 is attached to the metal plate 165.

In the present modification, since the tape 185 is provided as described above, an extended portion of the tape 185 is formed over the entire circumference of the through hole 151 by the tape extended portions 186A, 186B, 187A, and 187B. The tape extended portions 186A, 186B, 187A, and 187B extend along the peripheral wall 143 of the frame assembly 133.

Also in the present modification, insulation of the battery row 155 (battery group 132) from the metal plate 165 can be appropriately secured without excessively increasing the size of the battery module 131, as in the above-described embodiment, etc. Further, in the present modification, providing the tape 185 reduces an influence of thermal stress caused by a difference in thermal expansion between the frame assembly 133 and the metal plate 165, as in the first embodiment, etc.

In the present modification, providing the tape 185 effectively prevents entry of water droplets, dust, and the like into the inner cavity of the frame assembly 133 through between each of the protruding portions 152 and the insulating film 168 on the metal plate 165, as in the first embodiment, etc. In the present modification, providing the tape 185 effectively prevents entry of water droplets, dust, and the like into the inner cavity of the frame assembly 133 through between each of the relay portions 153 and the insulating film 168 on the metal plate 165, as in the first embodiment, etc. Thus, the battery row 155 (battery group 132) can be arranged in an environment with a low pollution degree, as in the first embodiment, etc.

The number of battery rows (55, 155) in the battery group (32, 132) of the battery module (31, 131) is not limited to that of the above-described embodiment. Further, the number of batteries (1) arrayed in each of the battery rows (55, 155) is not limited to that of the above-described embodiment. The configuration of the above-described protruding portion (52, 152), sheet (66, 166), metal plate (65, 165), and insulating film (68, 168) is applicable if one or more battery rows (55, 155) are provided and a plurality of batteries (1) are arrayed in each of the battery rows (55, 155) .

According to at least one of these embodiments or examples, the frame protruding portion protrudes from the frame side wall inward in the array direction of the batteries in the battery row, and is adjacent to the outermost battery on the lower side. The through hole is adjacent to the inner side of the frame protruding portion. At least a part of the sheet is arranged in the through hole and closely contacts the battery row from the lower side. The insulating film extends outward beyond the protruding end of the frame protruding portion between the metal plate and the sheet. Thus, it is possible to provide a battery module in which dissipation of heat generated in the battery row is secured and insulation of the battery row from a conductor other than the battery is appropriately secured.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. These embodiments and modifications thereof are included in the scope and gist of the inventions, and are included in the inventions described in the claims and the equivalents thereof.

## Claims

1. A battery module comprising:
a battery row including a plurality of batteries arrayed, each of the plurality of batteries including an electrode group and a metal exterior container in which the electrode group is housed;
a frame including a frame side wall facing an outermost battery, among the plurality of batteries, on the outermost side in an array direction of the battery row from an outer side in the array direction, and a frame protruding portion protruding toward an inner side in the array direction from the frame side wall and having an electrical insulating property, the frame protruding portion being adjacent to the outermost battery on a lower side in a height direction intersecting the array direction, and a through hole being formed adjacent to an inner side of the frame protruding portion in the array direction;
a sheet that has an electrical insulating property and is at least partially arranged in the through hole, the sheet closely contacting the plurality of batteries in the battery row from the lower side in the height direction;
a metal plate arranged on the lower side in the height direction with respect to the sheet; and
an insulating film that has an electrical insulating property and is stacked on the metal plate between the metal plate and the sheet in the height direction, the insulating film extending to the outer side beyond a protruding end of the frame protruding portion in the array direction.

2. The battery module according to claim 1, wherein the insulating film closely contacts the metal plate.

3. The battery module according to claim 1 or 2, wherein a portion where the frame protruding portion and the insulating film overlap is 5 mm to 20 mm.

4. The battery module according to any one of claims 1 to 3, wherein
the frame includes a frame leg portion extending from the frame protruding portion toward the lower side in the height direction,
the frame leg portion is adjacent to the metal plate and the insulating film on the outer side in the array direction, and
the frame leg portion is located on the outer side of the protruding end of the frame protruding portion in the array direction.

5. The battery module according to any one of claims 1 to 4, wherein a dimension of the insulating film in the array direction is the same as a dimension of the metal plate in the array direction.

6. The battery module according to any one of claims 1 to 5, wherein a distance from an outer edge of the metal plate to an outer edge of the insulating film toward the inner side in the array direction is 3 mm or less.

7. The battery module according to any one of claims 1 to 6, wherein
the sheet has a higher thermal conductivity than the frame, and
a contact area of the sheet with each outermost battery is smaller than a contact area of the sheet with each battery other than the outermost battery among the plurality of batteries.

8. The battery module according to any one of claims 1 to 7, further comprising an adhesive provided at least one of between the outermost battery and the frame protruding portion and between the outermost battery and the frame side wall, the adhesive bonding the outermost battery to at least one of the frame protruding portion and the frame side wall.

9. The battery module according to any one of claims 1 to 8, further comprising a tape that is provided between the frame and the insulating film in the height direction and causes the frame to adhere to the insulating film.

10. The battery module according to claim 9, further comprising:
a coupling screw that couples the frame to the metal plate,
wherein the tape includes a tape extended portion extending on an outer peripheral side of the battery row, and
the coupling screw is located on the outer peripheral side with respect to the tape extended portion.

11. The battery module according to any one of claims 1 to 10, further comprising:
a partition member that is arranged between the outermost battery and a battery adjacent to the outermost battery in the array direction in the battery row and electrically insulates the outermost battery from the battery adjacent to the outermost battery,
wherein the frame is assembled to the partition member by being engaged with the partition member.

12. The battery module according to claim 11, further comprising an end plate that contacts the frame from the outer side in the array direction and presses the frame toward the inner side in the array direction.

13. A battery system comprising:
the battery module according to any one of claims 1 to 12; and
a base on which the battery module is installed from an upper side in the height direction, and the metal plate being arranged between the base and the battery row in the height direction.
